# EUROPEAN PATENT APPLICATION

(11) **EP 4 557 832 A1**
(43) Date of publication of application: **21.05.2025**
(21) Application number: 23839557.8
(22) Date of filing: 06.07.2023
(51) Int. Cl.: H04W 36/28, H04W 16/32, H04W 72/0457, H04W 92/20

(54) **WIRELESS ACCESS NETWORK NODE AND METHOD FOR SAME**

(30) Priority: 13.07.2022 JP 2022112409
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: Mathys & Squire
(86) International application number: PCT/JP2023/025078
(87) International publication number: WO 2024/014385

(57) **Abstract**

A Master Node (1) receives (401) a first message from a candidate Secondary Node (SN) (4) that is common to both a first conditional PSCell change initiated by the MN (1) and a second conditional PSCell change initiated by a source SN (2). The MN (1) determines (402) which of the first conditional PSCell change or the second conditional PSCell change an updated list of one or more prepared PSCells indicated by the first message relates to. For example, this can provide an improved procedure for adding a prepared PSCell at the request of a candidate SN with respect to an already prepared conditional PSCell addition or inter-SN conditional PSCell change.

## Description

### Technical Field

The present disclosure relates to radio communication systems, and in particular to mobility of a radio terminal in multi-connectivity (e.g., Dual Connectivity).

### Background Art

The 3rd Generation Partnership Project (3GPP (registered trademark) Release 17 brings enhancements to conditional mobility. The newly introduced conditional mobility in 3GPP Release 17 includes Conditional Primary Secondary Cell Group (SCG) Cell (PSCell) Addition (CPA) and Inter-Secondary Node (SN) conditional PSCell Change (CPC) (see, for example, Non-Patent Literature 1-3). CPA is also referred to as conditional SN addition, while inter-SN CPC is also referred to as conditional SN change.

CPA (or conditional SN addition) is a PSCell addition (or SN addition) procedure that is executed only if one or more execution conditions are met or satisfied. After the radio terminal (i.e., User Equipment (UE)) receives a PSCell addition instruction from the Master Node (MN), it starts evaluation of the configured execution condition(s) for one or more candidate PSCells configured by the instruction. Then, in response to the fulfilment of the execution condition(s) for one of the candidate PSCells, the UE initiates synchronization with that PSCell. That is, CPA differs from normal PSCell addition in that the UE initiates synchronization or access to a PSCell not in response to a PSCell addition instruction, but in response to the fulfillment of an execution condition configured by the instruction. In CPA, the MN generates CPA execution conditions. A candidate SN generates an SCG configuration and sends it to the MN. The MN sends a CPA configuration (e.g., ConditionalReconfiguration Information Element (IE)) containing both the CPA execution conditions and the SCG configuration to the UE via a Radio Resource Control (RRC) (Connection) Reconfiguration message.

Inter-SN CPC is an SN change procedure that is executed only if one or more execution conditions are met or satisfied. A target SN in inter-SN CPC is also referred to as a candidate SN or target candidate SN. The UE maintains a connection to the source SN and source SCG even after receiving an SN change instruction from the MN and starts to evaluate the configured execution condition(s) configured by the instruction. The UE then starts to access the candidate target SN and the selected candidate PSCell in response to the fulfillment of the execution condition(s). That is, CPC differs from normal SN change in that the UE initiates access to the candidate target SN not in response to an SN change instruction, but in response to the fulfillment of an execution condition configured by the instruction.

Inter-SN CPC can be initiated by the MN or by the source SN. Inter-SN CPC initiated by the MN is referred to as MN-initiated inter-SN CPC. On the other hand, inter-SN CPC initiated by the source SN is referred to as SN-initiated inter-SN CPC. In MN-initiated inter-SN CPC, the MN generates CPC execution conditions. In contrast, in SN-initiated inter-SN CPC, the source SN generates CPC execution conditions and sends them to the MN. In both MN-initiated inter-SN CPC and SN-initiated inter-SN CPC, candidate target SNs generate their SCG configurations and send them to the MN. The MN then sends a CPC configuration (e.g., ConditionalReconfiguration IE) containing both the CPC execution conditions and the SCG configurations to the UE via an RRC (Connection) Reconfiguration message.

The 3GPP Technical Specification Group (TSG) Radio Access Network (RAN) has agreed that a candidate SN can add a new prepared PSCell after the CPA or inter-SN CPC has been prepared or configured. (See, for example, Non-Patent Literature 2 and 4-8). Specifically, a (target) candidate SN may add one or more prepared PSCells from the list suggested by the MN or the source SN, within the upper limit specified by the MN or the source SN, using an SN-initiated SN modification procedure. This operation or procedure may be referred to as, for example, but not limited to, a candidate SN-triggered prepared cell addition.

### Citation List

### Non Patent Literature

[Non-Patent Literature 1] 3GPP TS 37.340 V17.0.0 (2022-03), "3rd Generation Partnership Project; Technical Specification Group Radio Access Network; Evolved Universal Terrestrial Radio Access (E-UTRA) and NR; Multi-connectivity; Stage 2 (Release 17)", April 2022
[Non-Patent Literature 2] 3GPP TS 38.423 V17.1.0 (2022-06), "3rd Generation Partnership Project; Technical Specification Group Radio Access Network; NG-RAN; Xn application protocol (XnAP) (Release 17)", June 2022
[Non-Patent Literature 3] 3GPP TS 38.331 V17.0.0 (2022-03), "3rd Generation Partnership Project; Technical Specification Group Radio Access Network; NR; Radio Resource Control (RRC) protocol specification (Release 17)", April 2022
[Non-Patent Literature 4] 3GPP TSG RAN WG3, "Reply LS on CPAC", R2-2204493, 3GPP TSG-RAN WG2 Meeting #118-e, May 9-20, 2022
[Non-Patent Literature 5] ZTE Corporation, Sanechips, CATT, Ericsson, "Corrections on TS 37.340 for DCCA enhancement", R2-2206829, 3GPP TSG-RAN WG2 Meeting #118-e, May 9-20, 2022
[Non-Patent Literature 6] ZTE, Lenovo, CATT, Ericsson, Google, "Correction on CPAC to 38.423", R3-223894, 3GPP TSG-RAN WG3 Meeting #116-e, May 9-19, 2022
[Non-Patent Literature 7] Huawei, China Telecom, Deutsche Telekom, Qualcomm Incorporated, Nokia, Nokia Shanghai Bell, "Correction on CPAC", R3-223895, 3GPP TSG-RAN WG3 Meeting #116-e, May 9-19, 2022
[Non-Patent Literature 8] Huawei, HiSilicon, "Corrections for further MRDC enhancements", R2-2206266, 3GPP TSG-RAN WG2 Meeting #118-e, May 9-20, 2022

### Summary of Invention

### Technical Problem

The inventors have studied CPA and inter-SN CPC and found problems. One of these problems relates to a candidate SN-triggered prepared cell addition in inter-SN CPC. According to Non-Patent Literature 2 and 7, an Xn Application Protocol message sent by a candidate SN to the MN to propose or request the addition of prepared PSCell(s), i.e., an S-NODE MODIFICATION REQUIRED message, may include a Candidate PSCell List IE in its CPAC Information Required IE. The Candidate PSCell List IE specifies the full or complete list of candidate PSCells prepared by the (target) candidate SN. However, this S-NODE MODIFICATION REQUIRED message does not include information indicating whether it is for an MN-initiated inter-SN CPC or an S-SN-initiated inter-SN CPC.

It should be noted that a candidate SN can be configured or prepared in parallel for both an MN-initiated inter-SN CPC and an S-SN-initiated inter-SN CPC. Thus, the same cell may be prepared as a PSCell for these two CPCs. In particular, it is possible that all of the prepared PSCells included in the Candidate PSCell List provided by the candidate SN to the MN may be included commonly or overlapping in both the suggested list of the MN-initiated inter-SN CPC and the suggested list of the SN-initiated inter-SN CPC. In this case, the MN may not be able to distinguish whether one or more new prepared PSCells added to the Candidate PSCell List are for the MN-initiated inter-SN CPC or the SN-initiated inter-SN CPC. In such cases, it is not clear how the MN should proceed.

The inventors have identified several other problems in implementing candidate SN-triggered prepared cell addition. One problem is that in a CPA or inter-SN CPC, it is not clear which node handles a request or proposal from a candidate SN to add one or more prepared PSCells. Another problem is that it is not clear whether or not the MN or the source SN is allowed to partially or completely reject one or more prepared PSCells requested or proposed to be added by a candidate SN. Still another problem is that it is not clear how and which node determines the execution conditions for added prepared PSCell(s) from the RRC point of view.

One of the objects to be achieved by the example embodiments disclosed herein seek to achieve is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

A first aspect is directed to a radio access network (RAN) node configured to operate as an MN associated with a Master Cell Group (MCG) in dual connectivity for a UE. The RAN node includes at least one memory and at least one processor coupled to the at least one memory. The at least one processor is configured to receive a first message from a candidate SN that is common to both a first conditional PSCell change initiated by the MN and a second conditional PSCell change initiated by a source SN. The at least one processor is configured to determine which of the first conditional PSCell change or the second conditional PSCell change an updated list of one or more prepared PSCells indicated by the first message relates to.

A second aspect is directed to a method performed by a RAN node configured to operate as an MN associated with an MCG in dual connectivity for a UE. The method includes the steps of:
(a) receiving a first message from a candidate SN, the candidate SN being common to both a first conditional PSCell change initiated by the MN and a second conditional PSCell change initiated by a source SN; and
(b) determining which of the first conditional PSCell change or the second conditional PSCell change an updated list of one or more prepared PSCells indicated by the first message relates to.

A third aspect is directed to a RAN node configured to operate as a candidate SN associated with an SCG in dual connectivity for a UE. The RAN node includes at least one memory and at least one processor coupled to the at least one memory. The at least one processor is configured to prepare SN resources for the UE with respect to both a first conditional PSCell change initiated by an MN and a second conditional PSCell change initiated by a source SN. The at least one processor is configured to send a first message to the MN. The first message includes an information element or field indicating which of the first conditional PSCell change or the second conditional PSCell change a modification of a conditional PSCell addition or change information requested by the first message is associated with.

A fourth aspect is directed to a method performed by a RAN node configured to operate as a candidate SN associated with an SCG in dual connectivity for a UE. The method includes the steps of:
(a) preparing SN resources for the UE with respect to both a first conditional PSCell change initiated by an MN and a second conditional PSCell change initiated by a source SN; and
(b) sending a first message to the MN, wherein the first message includes an information element or field indicating which of the first conditional PSCell change or the second conditional PSCell change a modification of a conditional PSCell addition or change information requested by the first message is associated with.

A fifth aspect is directed to a RAN node configured to operate as an MN associated with an MCG in dual connectivity for a UE. The RAN node includes at least one memory and at least one processor coupled to the at least one memory. The at least one processor is configured to receive a first message from a candidate SN of a conditional PSCell change initiated by a source SN. The at least one processor is configured to determine whether or not to accept an addition of one or more prepared PSCells requested or proposed by the first message, with respect to the conditional PSCell change initiated by the source SN.

A sixth aspect is directed to a method performed by a RAN node configured to operate as an MN associated with an MCG in dual connectivity for a UE. The method includes the steps of:
(a) receiving a first message from a candidate SN of a conditional PSCell change initiated by a source SN; and
(b) determining whether or not to accept an addition of one or more prepared PSCells requested or proposed by the first message, with respect to the conditional PSCell change initiated by the source SN.

A seventh aspect is directed to a RAN node configured to operate as an MN associated with an MCG in dual connectivity for a UE. The RAN node includes at least one memory and at least one processor coupled to the at least one memory. The at least one processor is configured to receive a first message from a candidate SN of a conditional PSCell addition or a conditional PSCell change. The at least one processor is configured to determine whether or not to reject part or all of one or more prepared PSCells requested or proposed to be added by the first message.

An eighth aspect is directed to a method performed by a RAN node configured to operate as an MN associated with an MCG in dual connectivity for a UE. The method includes the steps of:
(a) receiving a first message from a candidate SN of a conditional PSCell addition or a conditional PSCell change; and
(b) determining whether or not to reject part or all of one or more prepared PSCells requested or proposed to be added by the first message.

A ninth aspect is directed to a RAN node configured to operate as a source SN associated with an SCG in dual connectivity for a UE. The RAN node includes at least one memory and at least one processor coupled to the at least one memory. The at least one processor is configured to receive from an MN a first message regarding a conditional PSCell change initiated by the source SN that has already been prepared. The first message indicates one or more prepared PSCells requested or proposed to be added by the candidate SN. The at least one processor is configured to determine whether or not to reject part or all of the one or more prepared PSCells requested or proposed to be added by the candidate SN.

A tenth aspect is directed to a method performed by a RAN node configured to operate as a source SN associated with an SCG in dual connectivity for a UE. The method includes the steps of:
(a) receiving from an MN a first message regarding a conditional PSCell change initiated by the source SN that has already been prepared, the first message specifying one or more prepared PSCells requested or proposed to be added by the candidate SN; and
(b) determining whether or not to reject part or all of the one or more prepared PSCells requested or proposed to be added by the candidate SN.

An eleventh aspect is directed to a RAN node configured to operate as an MN associated with an MCG in dual connectivity for a UE. The RAN node includes at least one memory and at least one processor coupled to the at least one memory. The at least one processor is configured to retain execution condition information received from a source SN in a preparation of a conditional PSCell change initiated by the source SN. The at least one processor is configured to receive a first message from a candidate SN of the conditional SN change that has already been prepared. The at least one processor is configured to select, from the retained execution condition information, one or more execution conditions for each of one or more prepared PSCells requested or proposed to be added by the first message. The at least one processor is further configured to transmit an RRC message to the UE. The RRC message includes an SCG configuration for each of the one or more prepared PSCells provided by the candidate SN by the first message and also includes the selected one or more execution conditions for each of the one or more prepared PSCells.

A twelfth aspect is directed to a method performed by a RAN node configured to operate as an MN associated with an MCG in dual connectivity for a UE. The method includes the steps of:
(a) retaining execution condition information received from a source SN in a preparation of a conditional PSCell change initiated by the source SN;
(b) receiving a first message from a candidate SN of the conditional SN change that has already been prepared;
(c) selecting, from the retained execution condition information, one or more execution conditions for each of one or more prepared PSCells requested or proposed to be added by the first message; and
(d) transmitting an RRC message to the UE, the RRC message including an SCG configuration for each of the one or more prepared PSCells provided by the candidate SN by the first message and also including the selected one or more execution conditions for each of the one or more prepared PSCells.

A thirteenth aspect is directed to a program. The program includes a set of instructions (software code) that, when read into a computer, causes the computer to perform the method according to the second, fourth, sixth, eighth, tenth or twelfth aspect described above.

### Advantageous Effects of Invention

According to the aspects described above, it is possible to provide apparatuses, methods, and programs that contribute to solving at least one of a plurality of problems related to conditional mobility, including the problems described above.

### Brief Description of Drawings

Fig. 1 shows an example configuration of a radio communication system according to an example embodiment;
Fig. 2 shows an example configuration of a radio communication system according to an example embodiment;
Fig. 3 shows an example configuration of a RAN node according to an example embodiment;
Fig. 4 shows a flowchart showing an example operation of a RAN node (i.e., MN) according to an example embodiment;
Fig. 5 shows a flowchart showing an example operation of a RAN node (i.e., MN) according to an example embodiment;
Fig. 6 shows a flowchart showing an example operation of a RAN node (i.e., MN) according to an example embodiment;
Fig. 7 is a sequence diagram showing an example of signaling regarding inter-SN CPC (or conditional SN change) according to an example embodiment;
Fig. 8 shows an example of the format of an S-NODE MODIFICATION REQUIRED message according to an example embodiment;
Fig. 9 shows an example of the format of a CG-CandidateList message according to an example embodiment;
Fig. 10 shows a flowchart showing an example operation of a RAN node (i.e., MN) according to an example embodiment;
Fig. 11 shows a flowchart showing an example operation of a RAN node (i.e., MN) according to an example embodiment;
Fig. 12 shows a flowchart showing an example operation of a RAN node (i.e., MN) according to an example embodiment;
Fig. 13 is a sequence diagram showing an example of signaling regarding SN-initiated inter-SN CPC (or conditional SN change) according to an example embodiment;
Fig. 14 shows a flowchart showing an example operation of a RAN node (i.e., MN) according to an example embodiment;
Fig. 15 shows a flowchart showing an example operation of a RAN node (i.e., MN) according to an example embodiment;
Fig. 16 shows an example of the format of an S-NODE MODIFICATION CONFIRM message according to an example embodiment;
Fig. 17 shows an example of the format of an S-NODE MODIFICATION CONFIRM message according to an example embodiment;
Fig. 18 shows a flowchart showing an example operation of a RAN node (i.e., source SN) according to an example embodiment;
Fig. 19 shows a flowchart showing an example operation of a RAN node (i.e., source SN) according to an example embodiment;
Fig. 20 shows an example of the format of an S-NODE MODIFICATION REQUEST ACKNOWLEDGE message according to an example embodiment;
Fig. 21 shows a flowchart showing an example operation of a RAN node (i.e., MN) according to an example embodiment;
Fig. 22 is a block diagram showing an example configuration of a RAN node according to an example embodiment; and
Fig. 23 is a block diagram showing an example configuration of a UE according to an example embodiment.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

The following example embodiments are described primarily with respect to the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used herein includes improvements and enhancements to LTE and LTE-Advanced to enable interworking with 5G systems, unless otherwise specified.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

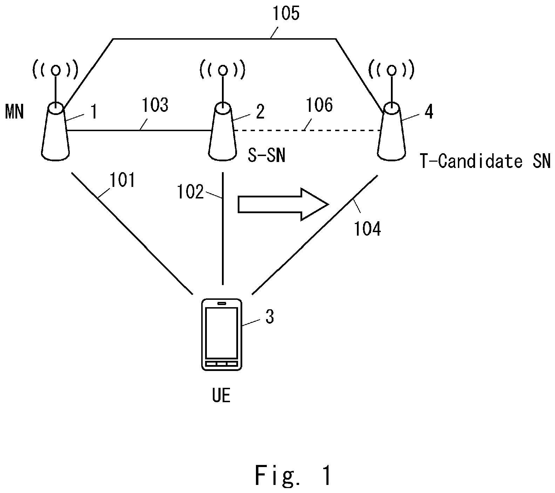

First, the configuration and operation of a plurality of network elements common to a plurality of example embodiments are described. Fig. 1 shows an example configuration of a radio communication system according to a plurality of example embodiments. In the example of Fig. 1, the radio communication system includes a RAN node 1, a RAN node 2, a RAN node 4, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, each of the RAN nodes 2 and 4 may be a CU or a combination of a CU and one or more DUs. Each of the RAN nodes 2 and 4 may be a CU-CP or a combination of a CU-CP and a CU-UP(s).

Each of the RAN nodes 1, 2, and 4 may be an Evolved Universal Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as an SN in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN nodes 2 and 4.

The RAN node 1 and the RAN node 2 communicate with each other through an inter-node interface (i.e., X2 interface or Xn interface) 103. The RAN node 1 and the RAN node 2 operate as a MN and an SN, respectively, in dual connectivity. In addition, the RAN node 1 and the RAN node 4 communicate with each other through an inter-node interface (i.e., X2 interface or Xn interface) 105. The RAN node 1 and the RAN node 4 can operate as an MN and an SN, respectively, in DC. An inter-node interface (i.e., X2 interface or Xn interface) 106 may be configured between the RAN node 2 and the RAN node 4.

The RAN nodes 1, 2, and 4 and the UE 3 support inter-SN CPC from an SCG provided by the RAN node 2 to an SCG provided by the RAN node 4. Accordingly, in the following, the RAN node 1 may be referred to as MN 1, the RAN node 2 may be referred to as source SN (S-SN) 2, and the RAN node 4 may be referred to as target SN (T-SN) 4, candidate SN 4, or target candidate SN 4. Inter-SN CPC may also be referred to as conditional SN change.

Inter-SN CPC (or conditional SN change) is an inter-SN PSCell change (or SN change) procedure that is executed only if one or more CPC execution conditions are met or satisfied. The UE 3 maintains a connection to the source SN 2 and source SCG even after receiving an SN change instruction from the MN 1 and starts to evaluate the configured execution condition(s) configured by the instruction. The UE 2 then starts to access the candidate target SN 4 and the selected candidate PSCell in response to the fulfillment of the execution condition(s).

Inter-SN CPC can be initiated by the MN 1 or by the source SN 2. Inter-SN CPC initiated by the MN 1 is referred to as MN-initiated inter-SN CPC. On the other hand, inter-SN CPC initiated by the source SN 2 is referred to as SN-initiated inter-SN CPC. In MN-initiated inter-SN CPC, the MN 1 generates CPC execution conditions. In contrast, in SN-initiated inter-SN CPC, the source SN 2 generates CPC execution conditions and sends them to the MN 1. In both MN-initiated inter-SN CPC and SN-initiated inter-SN CPC, the candidate target SN 4 generates an SCG configuration and sends it to the MN 1. The MN 1 then sends a CPC configuration (e.g., ConditionalReconfiguration IE) containing both the CPC execution conditions and the SCG configuration to the UE 3 via an RRC (Connection) Reconfiguration message. The SCG configuration can be referred to as the SCG radio resource configuration.

Although not shown in Fig. 1, a plurality of candidate cells (i.e., candidate PSCells) provided by a plurality of candidate SNs 4 may be prepared for an inter-SN CPC. In the inter-SN CPC procedure, the UE 3 receives, from the MN 1, configurations of one or more candidate PSCells (i.e., one or more SCG configurations) prepared by one or more candidate SNs and one or more CPC execution conditions associated therewith. More specifically, the configuration of each candidate PSCell is included in an information element (e.g., condRRCReconfig) of an RRC message of the MN 1, and the configurations of one or more candidate PSCells and the associated CPC execution conditions are included in conditional mobility configuration information (e.g., conditionalReconfiguration IE) generated by the MN 1.

The configuration of each candidate PSCell (i.e., SCG configuration) is generated by the candidate SN (e.g., candidate SN 4) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell, or the SCG configuration, may be a radio bearer (RB) configuration, a cell group (CG) configuration, or an SCG radio resource configuration, or any combination thereof. More specifically, the configuration of each candidate PSCell, or the SCG configuration, may be an SN RRC Reconfiguration message generated by the candidate SN (e.g., candidate SN 4) that provides (or has prepared) that candidate PSCell. Part or all of the configurations of one or more candidate PSCells are contained in a CPC configuration sent from the MN 1 to the UE 3. The CPC configuration of an inter-SN CPC includes a list of one or more MN RRC Reconfiguration messages, and associated execution conditions. Each MN RRC Reconfiguration message contains the configuration of a candidate PSCell (or the SCG configuration) (e.g., one or any combination of RB configuration, CG configuration, SCG radio resource configuration, and SN RRC Reconfiguration message) received from the candidate SN.

On the other hand, CPC execution conditions are generated by the MN 1 in the case of MN-initiated inter-SN CPC or by the source SN 2 in the case of SN-initiated inter-SN CPC. A CPC execution condition may consist of one or more trigger conditions. A condition or criterion that triggers a CPC event may be similar to that for a measurement report event and may be, for example, CondEvent B1, CondEvent A3, CondEvent A4, or CondEvent A5. CondEvent B1 is "Conditional reconfiguration candidate becomes better than absolute threshold". CondEvent A3 is "Conditional reconfiguration candidate becomes amount of offset better than PCell/PSCell". CondEvent A4 is "Conditional reconfiguration candidate becomes better than absolute threshold". CondEvent A5 is "PCell/PSCell becomes worse than absolute threshold1 AND Conditional reconfiguration candidate becomes better than another absolute threshold2". The UE 3 evaluates the CPC execution conditions. If the execution condition(s) for one candidate PSCell is (or are) met, the UE 3 applies the PSCell configuration or SCG configuration (e.g., one or any combination of RB configuration, CG configuration, SCG radio resource configuration, and SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

The UE 3 communicates with the MN 1 and the S-SN 2 via the air interfaces 101 and 102 and performs dual connectivity of the MCG provided by the MN 1 and the SCG provided by the S-SN 2. In addition, by performing an inter-SN CPC, the UE 3 communicates with the MN 1 and the T-SN 4 via the air interfaces 101 and 104 and performs dual connectivity of the MCG provided by the MN 1 and the SCG provided by the T-SN 4.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, each of the S-SN 2 and the T-SN 4 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the S-SN 2 or the T-SN 4. In NGEN-DC, the UE 3 is connected to an ng-eNB acting as the MN 1 and to a gNB acting as the S-SN 2 or the T-SN 4. In NE-DC, the UE 3 is connected to a gNB acting as the MN 1 and to an ng-eNB acting as the S-SN 2 or the T-SN 4. In NR-DC, the UE 3 is connected to one gNB (or gNB-DU) acting as the MN 1 and to another gNB (or gNB-DU) acting as the S-SN 2 or the T-SN 4.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the S-SN 2 or the T-SN 4 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

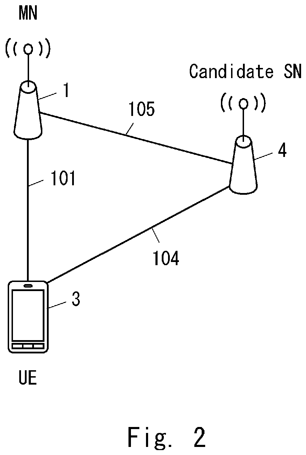

Fig. 2 shows another example configuration of a radio communication system according to a plurality of example embodiments. In the example in Fig. 2, the radio communication system includes a RAN node 1, a RAN node 4, and a UE 3. Each element (or network function) shown in Fig. 2 can be implemented, for example, as a network element on dedicated hardware, as a software instance running on dedicated hardware, or as a virtualized function instantiated on an application platform.

The RAN node 1, RAN node 4, and UE 3 in the example in Fig. 2 may have a similar configuration and functionality to those in the example in Fig. 1. Specifically, the RAN node 1 and the RAN node 4 communicate with each other through an inter-node interface (i.e., X2 interface or Xn interface) 105. The RAN node 1 and the RAN node 4 operate as an MN and a SN, respectively, in dual connectivity. The UE 3 communicates with the MN 1 and the SN 4 via air interfaces 101 and 104 and performs dual connectivity of an MCG and an SCG. This dual connectivity may be Multi-Radio Dual Connectivity (MR-DC).

The RAN nodes 1 and 4 and the UE 3 support Conditional PSCell Addition (CPA) to add an SCG provided by the RAN node 4 for the UE 3. Accordingly, in the following, the RAN node 1 may be referred to as MN 1 and the RAN node 4 may be referred to as candidate SN 4. CPA may be referred to as conditional SN addition. CPA (or conditional SN addition) is a PSCell addition (or SN addition) procedure that is performed only if a CPA execution condition is met.

CPA (or conditional SN addition) is a PSCell addition (or SN addition) procedure that is executed only if one or more CPA execution conditions are met or satisfied. After the UE 3 receives a PSCell addition instruction from the MN 1, it starts evaluation of the configured execution condition(s) for one or more candidate PSCells configured by the instruction. Then, in response to the fulfilment of the execution condition(s) for one of the candidate PSCells, the UE 3 initiates synchronization with that PSCell. In CPA, the MN 1 generates CPA execution conditions. The candidate SN 4 generates an SCG configuration and sends it to the MN 1. The MN 1 sends a CPA configuration (e.g., ConditionalReconfiguration IE) containing both the CPA execution conditions and the SCG configuration to the UE 3 via an RRC (Connection) Reconfiguration message.

Although not shown in Fig. 2, a plurality of candidate PSCells provided by a plurality of candidate SNs 4 may be prepared for a CPA. In the CPA procedure, the UE 3 receives, from the MN 1, configurations of one or more candidate PSCells (i.e., one or more SCG configurations) prepared by one or more candidate SNs and one or more CPA execution conditions associated therewith. More specifically, the configuration of each candidate PSCell is included in an information element (e.g., condRRCReconfig) of an RRC message of the MN 1, and the configurations of one or more candidate PSCells and the associated CPA execution conditions are included in conditional mobility configuration information (e.g., conditionalReconfiguration IE) generated by the MN 1.

The configuration of each candidate PSCell is generated by the candidate SN (e.g., candidate SN 4) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell, or the SCG configuration, may be one or any combination of an RB configuration, a CG configuration, and an SCG radio resource configuration. More specifically, the configuration of each candidate PSCell, or the SCG configuration, may be an SN RRC Reconfiguration message generated by the candidate SN (e.g., candidate SN 4) that provides (or has prepared) that candidate PSCell. Part or all of the configurations of one or more candidate PSCells are contained in a CPA configuration sent from the MN 1 to the UE 3. The CPA configuration includes a list of one or more MN RRC Reconfiguration messages, and associated execution conditions. Each MN RRC Reconfiguration message contains the configuration of a candidate PSCell (or the SCG configuration) (e.g., one or any combination of RB configuration, CG configuration, SCG radio resource configuration, and SN RRC Reconfiguration message) received from the candidate SN.

On the other hand, CPA execution conditions are generated by the MN 1. A CPA execution condition may consist of one or more trigger conditions. A condition or criterion that triggers a CPA event may be similar to that for a measurement report event and may be, for example, CondEvent A3, CondEvent A4, or CondEvent A5. The UE 3 evaluates the CPA execution conditions. If the execution condition(s) for one candidate PSCell is (or are) met, the UE 3 applies the PSCell configuration (i.e., CG configuration, SCG configuration, SCG radio resource configuration, or SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

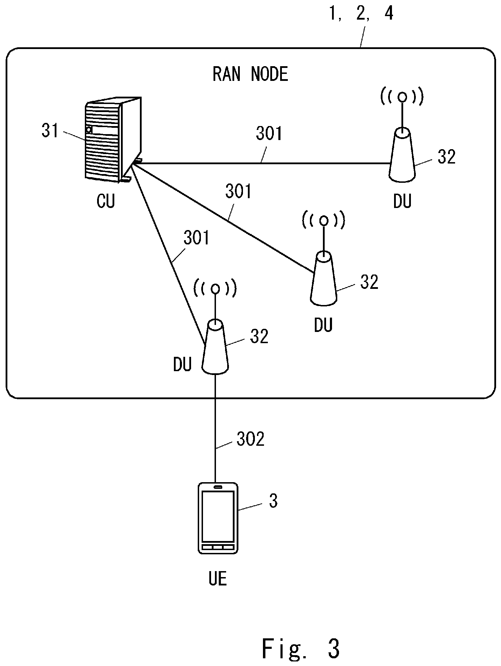

One or more of the RAN nodes 1, 2, and 4 may have the configuration shown in Fig. 3. Each element (or network function) shown in Fig. 3 can be implemented, for example, as a network element on dedicated hardware, as a software instance running on dedicated hardware, or as a virtualized function instantiated on an application platform. One or more of the RAN nodes 1, 2, and 4 may include, without limitation, a CU 31 and one or more DUs 32 as shown in Fig. 3. The CU 31 is connected to each DU 32 via an interface 301. The UE 3 is connected to at least one DU 32 via at least one air interface 302.

The CU 31 can be a logical node hosting the RRC, Service Data Adaptation Protocol (SDAP), and Packet Data Convergence Protocol (PDCP) protocols of the gNB (or the RRC and PDCP protocols of the gNB). The DU 32 can be a logical node hosting the Radio Link Control (RLC), Medium Access Control (MAC), and Physical (PHY) layers of the gNB. If the CU 31 is a gNB-CU and the DUs 32 are gNB-DUs, the interfaces 301 can be F1 interfaces. The CU 31 can include a CU-CP and a CU-UP.

The term "conditional mobility" is used herein. Conditional mobility is a generic term that refers to one or more of Conditional Handover (CHO), CPA, intra-SN CPC (or conditional SN modification), and inter-SN CPC (or conditional SN change).

The terms "MN RRC Message", "MN RRC (Connection) Reconfiguration Message", "SN RRC Message", and "SN RRC Reconfiguration Message" are used herein. These terms are used for convenience only to distinguish RRC messages generated by the MN from RRC messages generated by the SN. Accordingly, MN RRC messages and MN RRC (Connection) Reconfiguration messages may be referred to simply as RRC messages and RRC Reconfiguration messages (or RRC Connection Reconfiguration messages). Similarly, SN RRC messages and SN RRC Reconfiguration messages may be referred to simply as RRC messages and RRC Reconfiguration messages.

The following example embodiments provide improvements in conditional mobility. Some embodiments provide an improved procedure in which a candidate SN 4 adds one or more new prepared PSCells in a prepared CPA or inter-SN CPC. This operation or procedure may be referred to as, for example, but not limited to, a candidate SN-triggered prepared cell addition.

### First Example Embodiment

This example embodiment provides improvements to inter-SN CPC suitable for candidate SN-triggered prepared cell addition. Specifically, this example embodiment relates to clarifying various procedures regarding candidate SN-triggered prepared cell addition in cases where multiple inter-SN CPCs have been prepared in parallel. An example configuration of a radio communication system in this example embodiment may be the same as the example shown in Fig. 1.

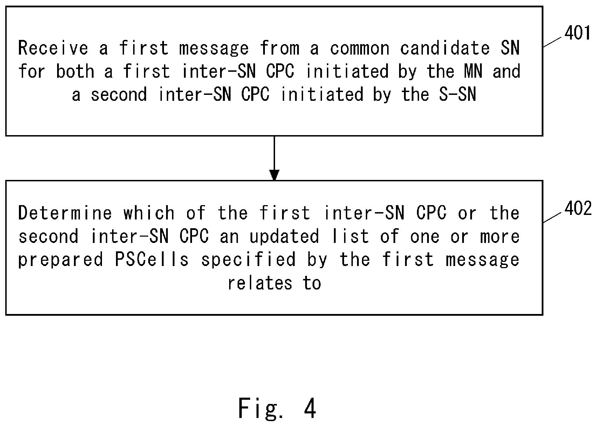

Fig. 4 shows an example of the operation of the MN 1. Fig. 4 is directed to a case where a first inter-SN CPC initiated by the MN 1 and a second inter-SN CPC initiated by the source SN 2 have been configured or prepared in parallel to a single target candidate SN 4. In step 401, the MN 1 receives a first message from the candidate SN 4. The candidate SN 4 is a candidate SN for the first inter-SN CPC (i.e., MN-initiated inter-SN CPC) and is also a candidate SN for the second inter-SN CPC (i.e., SN-initiated inter-SN CPC). The first message may be a message sent by the candidate SN 4 to request or propose a modification of SN resources for the UE 3. The first message may be a message requesting or proposing a modification or update of the prepared CPA or CPC information. The first message may be an S-NODE MODIFICATION REQUIRED message. The first message may contain an information element indicating that an update of the prepared CPA or CPC information is requested or proposed (e.g., Conditional PSCell Addition or Change (CPAC) Information Required IE, Prepared Cell Addition IE, Prepared CPC Update IE). Here, the prepared CPA or CPC information is information accepted by the candidate SN 4 in the previous SN addition procedure and provided to the MN 1 via an S-NODE ADDITION REQUEST ACKNOWLEDGE message (e.g., Conditional PSCell Addition Information Acknowledge IE in this message). The CPA or CPC information includes a list of one or more prepared PSCells prepared by the candidate SN 4. The list of prepared PSCells may be referred to as the prepared PSCell list or the prepared candidate PSCell list.

The first message specifies or contains an updated list of one or more prepared PSCells. The updated list may be referred to as the updated prepared PSCell list or the updated prepared candidate PSCell list. The updated list may indicate the addition of at least one new prepared PSCell, the cancellation (or release) of at least one existing prepared PSCell, or both. In other words, the updated list may be a list of prepared PSCells, updated by the addition of at least one new prepared PSCell, the cancellation of at least one existing prepared PSCell, or both. The updated list may indicate the updated full list of prepared PSCells. In other words, the updated list may include newly added prepared PSCell(s) as well as existing prepared PSCell(s) that have not been canceled.

In step 402, the MN 1 determines which of the first inter-SN CPC or the second inter-SN CPC the updated list of one or more prepared PSCells indicated by the first message relates to. In other words, the MN 1 determines which of the first inter-SN CPC or the second inter-SN CPC the modification or update of the CPA or CPC information indicated by the first message relates to.

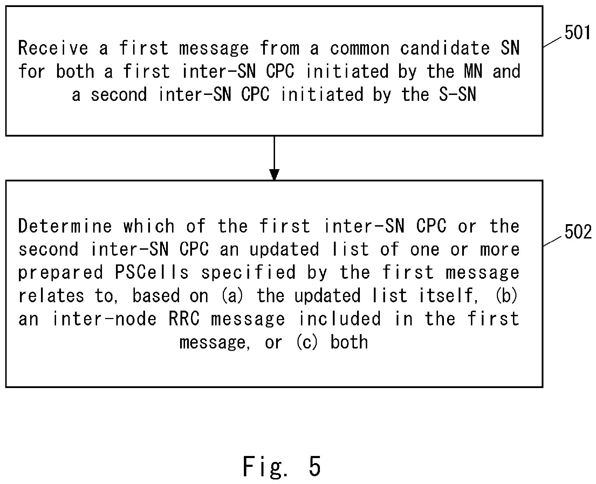

In some implementations, the MN 1 may operate as shown in Fig. 5. Step 501 is similar to step 401 in Fig. 4. In step 502, the MN 1 determines which of the first and second inter-SN CPCs the updated list relates to, based on (a) the updated list itself, (b) an inter-node RRC message included in the first message, or (c) both.

Specifically, the MN 1 may check which of a first suggested PSCell list for the first inter-SN CPC or a second suggested PSCell list for the second inter-SN CPC contains the one or more prepared PSCells included in the updated list received from the candidate SN 4. Here, the first suggested PSCell list is the list of candidate PSCells suggested by the MN 1 for the MN-initiated inter-SN CPC. On the other hand, the second suggested PSCell list is the list of candidate PSCells suggested by the source SN 2 for the SN-initiated inter-SN CPC. If the updated list contains a PSCell that is included in the first suggested PSCell list but not in the second suggested PSCell list, the MN 1 may determine (or conclude) that the updated list received from the candidate SN 4 relates to the first inter-SN CPC initiated by the MN 1. Conversely, if the updated list contains a PSCell that is included in the second suggested PSCell list but not in the first suggested PSCell list, the MN 1 may determine (or conclude) that the updated list received from the candidate SN 4 relates to the second inter-SN CPC initiated by the source SN 2.

Additionally or alternatively, the MN 1 may check an inter-node RRC message contained in the first message received from the candidate SN 4. If the MN 1 cannot determine from the updated list itself which of the first and second inter-SN CPCs the updated list relates to, the MN 1 may consider the inter-node RRC message in the first message. In general, an inter-node RRC message is an RRC message sent between RAN nodes via an inter-node interface such as the X2 or Xn interface. The inter-node RRC message in the first message is sent from the candidate SN 4 to the MN 1. The inter-node RRC message in the first message may be a CG-CandidateList message as specified in Section 11.2.2 of Non-Patent Literature 3.

The MN 1 may check the list of prepared PSCells to be released (e.g., cg-CandidateToReleaseList contained in the CG-CandidateList message) indicated by the inter-node RRC message in the first message. The MN 1 may then determine which of the first and second inter-SN CPCs the updated list relates to, based on which of the first and second inter-SN CPCs the one or more cell identifiers included in the list of prepared PSCells to be released relate to. Specifically, if the one or more cell identifiers contained in the list of prepared PSCells to be released relate to the first inter-SN CPC, the MN 1 may determine (or conclude) that the updated prepared PSCell list also relates to the first inter-SN CPC. Conversely, if the one or more cell identifiers contained in the list of prepared PSCells to be released relate to the second inter-SN CPC, the MN 1 may determine (or conclude) that the updated prepared PSCell list also relates to the second inter-SN CPC.

There may be cases where it is not possible to determine which of the first and second inter-SN CPCs the updated list relates to, either from the updated list itself, from the inter-node RRC message, or from both. For example, there may be cases where all the PSCell(s) in the updated prepared PSCell list are commonly included in both the first suggested PSCell list and the second suggested PSCell list. Furthermore, there may be cases where all the cell identifier(s) in the list of prepared PSCells to be released as specified by the inter-node RRC message in the first message are those of PSCell(s) that have been commonly prepared for both the first and second inter-SN CPCs. In such cases, the MN 1 may autonomously determine (or conclude) which of the first and second inter-SN CPCs the updated list relates to. In an example, the MN 1 may determine that the updated list relates to one of the first inter-SN CPC and the second inter-SN CPC that has the greater maximum number of PSCells that the candidate SN 4 is allowed to prepare. Conversely, the MN 1 may determine that the updated list relates to either the first inter-SN CPC or the second inter-SN CPC that has the smaller maximum number of PSCells that the candidate SN 4 is allowed to prepare. Alternatively, the MN 1 may conclude that the updated list relates to either the first or second inter-SN CPC, whichever has more room up to the maximum number of PSCells that the candidate SN 4 is allowed to prepare. Conversely, the MN 1 may conclude that the updated list relates to either the first or second inter-SN CPC, whichever has less room to the maximum number of PSCells that the candidate SN 4 is allowed to prepare. The maximum number of PSCells that the candidate SN 4 is allowed to prepare is determined by the node initiating the inter-SN CPC, i.e., by the MN 1 in the case of MN-initiated inter-SN CPC, and by the source SN 2 in the case of SN-initiated inter-SN CPC. The maximum number of PSCells that the candidate SN 4 is allowed to prepare can be sent by the MN 1 to the target candidate SN 4 via an S-NODE ADDITION REQUEST message during the preparation of the inter-SN CPC. In the case of SN-initiated inter-SN CPC, the maximum number of PSCells that the candidate SN 4 is allowed to prepare can be sent by the candidate SN 2 to the MN 1 via an S-NODE CHANGE REQUIRED message. The maximum number of PSCells that the candidate SN 4 is allowed to prepare may be included in a "Maximum Number of PSCells To Prepare" IE in an S-NODE ADDITION REQUEST message (and in an S-NODE CHANGE REQUIRED message).

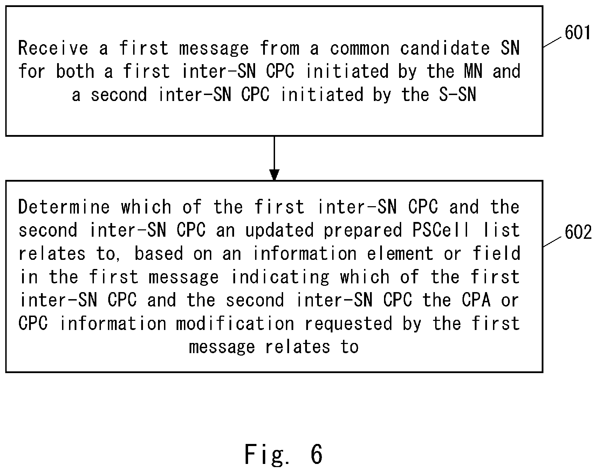

In other implementations, the MN 1 may operate as shown in Fig. 6, instead of the operation in Fig. 5. Step 601 is similar to step 401 in Fig. 4. In step 602, the MN 1 considers an information element or field in the first message that explicitly or implicitly indicates which of the first inter-SN CPC and the second inter-SN CPC the modification of the CPA or CPC information requested by the first message relates to. Depending on the content of this information element or field, the MN 1 determines which of the first and second inter-SN CPCs the updated prepared PSCell list relates to. In other words, in these implementations, the first message (e.g., S-NODE MODIFICATION REQUIRED message) is extended to include an information element or field indicating which of the first and second inter-SN CPCs the modification of the CPA or CPC information requested by the first message relates to.

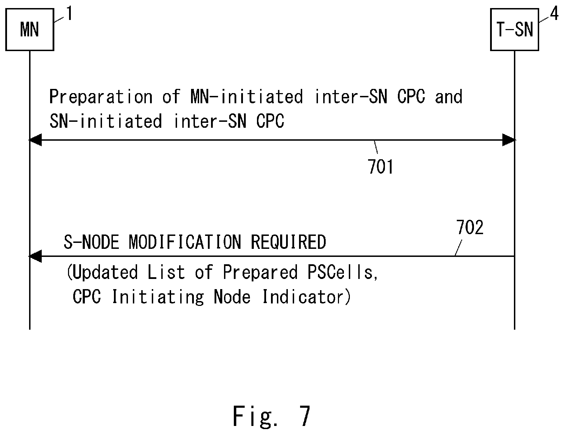

Fig. 7 shows an example of the operation of the MN 1 and the candidate target SN 4. In step 701, the MN 1 and the candidate SN 4 prepare both the first and second inter-SN CPCs, i.e., the MN-initiated inter-SN CPC and the SN-initiated inter-SN CPC. In step 702, the candidate SN 4 sends an S-NODE MODIFICATION REQUIRED message to the MN 1 to update the CPA or CPC information for either the first inter-SN CPC or the second inter-SN CPC. The S-NODE MODIFICATION REQUIRED message includes (or specifies) the updated list of prepared PSCell(s). In addition, the S-NODE MODIFICATION REQUIRED message includes an information element or field that explicitly or implicitly indicates which of the two inter-SN CPCs the CPA or CPC information update (or the prepared PSCell list update) relates to. The information element or field may explicitly indicate whether the node that has initiated the inter-SN CPC is the MN (e.g., MN 1) or the source SN (e.g., source SN 2). The name of this information element or field may be, for example, but not limited to, "CPC Initiating Node". Alternatively, the name of the information element or field may be "CPC Source Node", which means the node that has initiated the CPC procedure. The information element or field may be an X2AP or XnAP information element in the first message. Alternatively, the information element or field may be a field in an inter-node RRC message (e.g., CG-CandidateList message) contained in the first message.

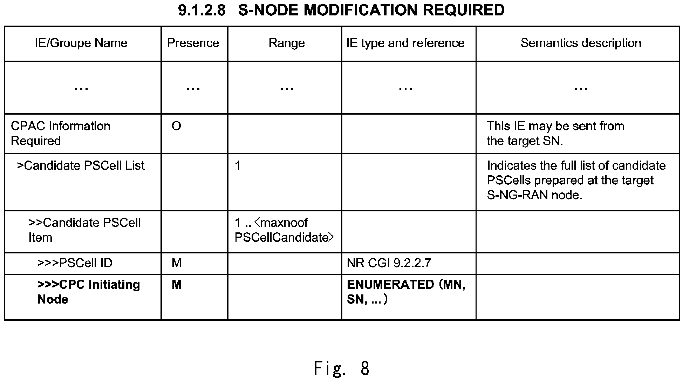

Fig. 8 shows an example of the format of the S-NODE MODIFICATION REQUIRED message. In the example in Fig. 8, a new information element "CPC Initiating Node" is included in the Candidate PSCell List IE. This information element may be of an enumerated type and may specify an MN or SN. The format of Fig. 8 may be modified as appropriate. For example, the CPC Initiating Node IE may be included in the CPAC Information Required IE in parallel with the Candidate PSCell List IE.

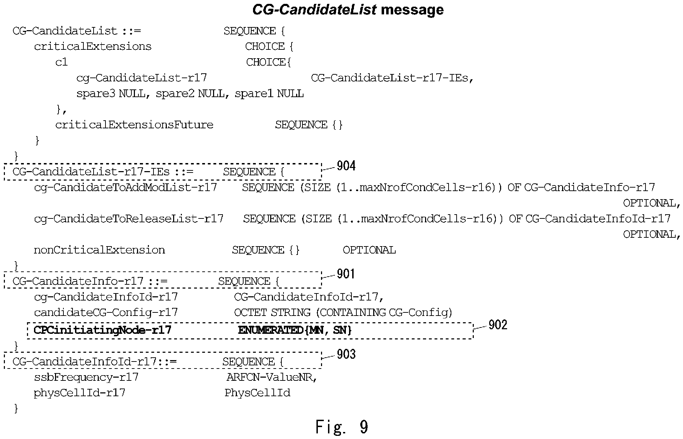

Fig. 9 shows an example of the format of a CG-CandidateList message, which is an inter-node RRC message. The CG-CandidateList message can be included in the S-NG-RAN node to M-NG-RAN node Container IE in an S-NODE MODIFICATION REQUIRED message sent by the candidate target SN 4 to the MN 1. In the example in Fig. 9, the CG-CandidateList message includes a CPCinitiatingNode information element or field 902 within the CG-CandidateInfo information element or field 901. The information element or field 902 may be of an enumerated type and may specify an MN or SN. The format of Fig. 9 may be modified as appropriate. For example, the CPCinitiatingNode information element or field 902 may be included within the CG-CandidateInfoId information element or field 903. Alternatively, the CPCinitiatingNode information element or field 902 may be included within the CG-CandidateList information element or field 904 in parallel with the cg-CandidateToAddModList or cg-CandidateToReleaseList or both.

The operation of the MN 1 and the candidate target SN 4 described in this example embodiment can provide the following advantages. That is, while both an MN-initiated inter-SN CPC and an SN-initiated inter-SN CPC have been prepared, the MN 1 can determine (or conclude) which of the two inter-SN CPCs an update list of the prepared PSCell list proposed or requested by the candidate SN 4 relates to.

### Second Example Embodiment

This example embodiment provides improvements to inter-SN CPC suitable for candidate SN-triggered prepared cell addition. Specifically, this example embodiment relates to clarifying various procedures regarding candidate SN-triggered prepared cell addition in cases where SN-initiated inter-SN CPCs have been prepared. Here, cases where the inter-SN CPC has been prepared means, for example, when the MN 1 has already completed sending an RRC message (e.g., RRC (Connection) Reconfiguration) for the inter-SN CPC to the UE 3, or the UE 3 has received the RRC message for the inter-SN CPC and has initiated the actions required for the inter-SN CPC (e.g. evaluation of candidate PSCells). An example configuration of a radio communication system in this example embodiment may be the same as the example shown in Fig. 1.

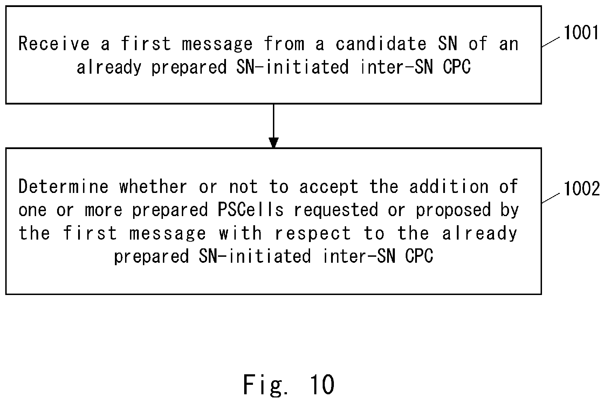

Fig. 10 shows an example of the operation of the MN1. In step 1001, the MN 1 receives a first message from the candidate SN 4 of the already prepared SN-initiated inter-SN CPC. Similar to the first example embodiment, the first message may be a message sent by the candidate SN 4 to request or propose a modification of SN resources for the UE 3. The first message may be a message requesting or proposing an update of the prepared CPA or CPC information. The first message may be an S-NODE MODIFICATION REQUIRED message.

The first message may specify (or contain) an updated list of one or more prepared PSCells. The updated list may be referred to as the updated prepared PSCell list. The updated list may indicate the addition of at least one new prepared PSCell, the cancellation (or release) of at least one existing prepared PSCell, or both. In other words, the updated list may be a list of prepared PSCells, updated by the addition of at least one new prepared PSCell, the cancellation of at least one existing prepared PSCell, or both. The updated list may indicate the updated full list of prepared PSCells. In other words, the updated list may include newly added prepared PSCell(s) as well as existing prepared PSCell(s) that have not been canceled.

In step 1002, the MN 1 determines whether or not to accept the addition of one or more prepared PSCells requested or proposed by the first message with respect to the already prepared inter-SN CPC.

According to the operation shown in Fig. 10, the MN 1 does not need to query the source SN 2, which initiated the inter-SN CPC, about the acceptability of one or more prepared PSCells requested or proposed to be added by the candidate SN 4. This can help to ensure that the configuration (SCG configuration) and associated execution conditions of the added prepared PSCells are promptly sent to the UE 3.

In some implementations, the MN 1 determines whether to accept or reject the entire prepared PSCell list update. In other words, the MN 1 may not need to support the acceptance (or rejection) of only a portion of the additions of new prepared PSCells that resulted in the updated prepared PSCell list. Similarly, the MN 1 may not need to support the acceptance (or rejection) of only a portion of the cancellations of one or more existing prepared PSCells that resulted in the updated prepared PSCell list.

In other implementations, the MN 1 determines whether or not to reject part or all of the prepared PSCells(s) requested or proposed to be added by the first message. The MN 1 may determine whether or not to reject part or all of the cancellations of existing prepared PSCells requested or proposed by the first message. The MN 1 may reject only one of the addition of new prepared PSCell(s) and the cancellation of existing prepared PSCell(s) requested or proposed by the first message.

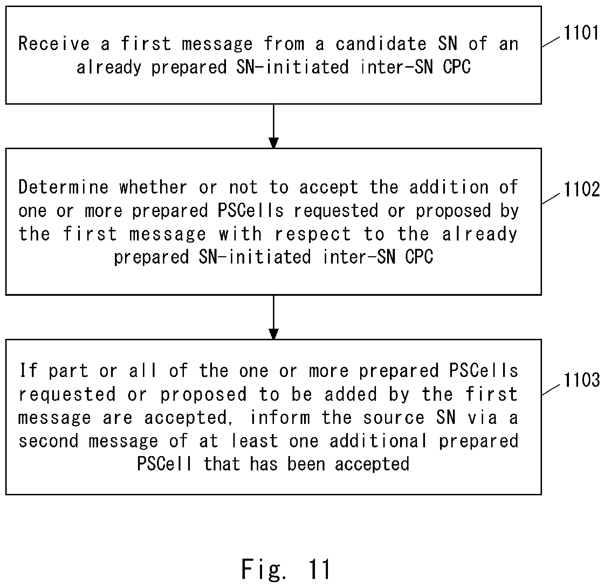

Fig. 11 shows an example of the operation of the MN 1. Steps 1101 and 1102 are similar to steps 1001 and 1002 in Fig. 10. In step 1103, if part or all of the one or more prepared PSCells requested or proposed to be added by the first message are accepted, the MN 1 informs the source SN 2 via a second message of at least one additional prepared PSCell that has been accepted. The second message may be an S-NODE MODIFICATION REQUEST message.

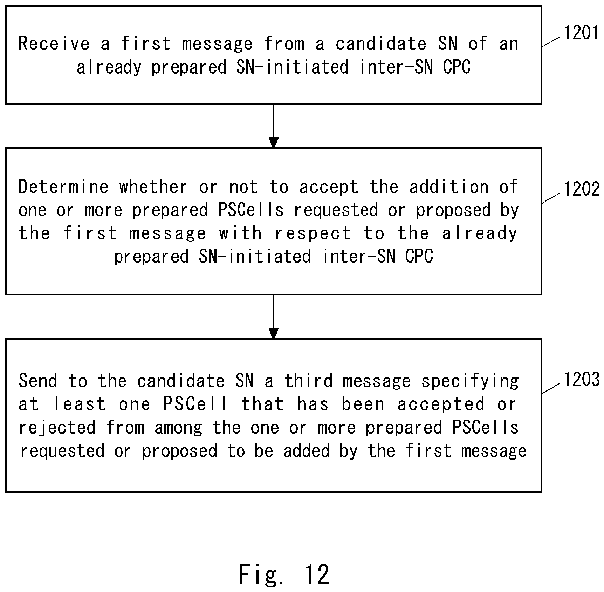

Fig. 12 shows an example of the operation of the MN 1. The operation in Fig. 12 can be performed by the MN 1 together with the operation in Fig. 11. Steps 1201 and 1202 are similar to steps 1001 and 1002 in Fig. 10. In step 1203, the MN 1 sends to the candidate SN 4 a third message specifying at least one accepted or rejected PSCell from among the one or more prepared PSCells requested or proposed to be added by the first message. The third message may specify a full list of accepted one or more prepared PSCells. The third message may be an S-NODE MODIFICATION CONFIRM message or an S-NODE MODIFICATION REFUSE message.

If the third message is an S-NODE MODIFICATION REFUSE message, the S-NODE MODIFICATION REFUSE message may specify a new Cause value. The new Cause value may be, for example, but not limited to, "CPA-CPC resources partially (NOT) accepted". The S-NODE MODIFICATION REFUSE message may contain an M-NG-RAN node to S-NG-RAN node Container IE. The M-NG-RAN node to S-NG-RAN node Container IE contains a CG-ConfigInfo message. The CG-ConfigInfo message is an inter-node RRC message sent by the MN 1 to the candidate SN 4, and may specify the full list of one or more prepared PSCells accepted by the MN 1.

If the MN 1 rejects all of the one or more prepared PSCells requested or proposed to be added by the first message, it may send a fourth message to the candidate SN 4 indicating that the modification of the CPA or CPC information requested by the first message is rejected. The fourth message may be an S-NODE MODIFICATION REFUSE message. The S-NODE MODIFICATION REFUSE message may specify a new Cause value. The new Cause value may be, for example, but not limited to, "CPA-CPC resources NOT accepted" or "CPA-CPC resources NOT updated".

The MN 1 may retain execution condition information received from the source SN 2 in the preparation of the SN-initiated inter-SN CPC. The MN 1 may then select (or read or retrieve), from the retained execution condition information, one or more execution conditions for each of the one or more prepared PSCells requested or proposed to be added by the first message. If the MN 1 accepts only part of the one or more prepared PSCells requested or proposed to be added, the MN 1 need only retrieve the execution conditions of the accepted prepared PSCell(s). The MN 1 may then transmit to the UE 3 an RRC message containing the SCG configuration for each of the prepared PSCell(s) provided by the candidate SN 4 in the first message and also containing the selected one or more execution conditions for each of these prepared PSCell(s). The RRC message may be an MN RRC (Connection) Reconfiguration message. According to this operation, when a prepared PSCell(s) is added with respect to an inter-SN CPC based on the request of the candidate SN 4, the MN 1 does not need to query the source SN 2 for the execution conditions associated with the added prepared PSCell(s). Thus, the MN 1 can immediately provide the UE 3 with the configuration (SCG configuration) and execution conditions of the added prepared PSCell(s).

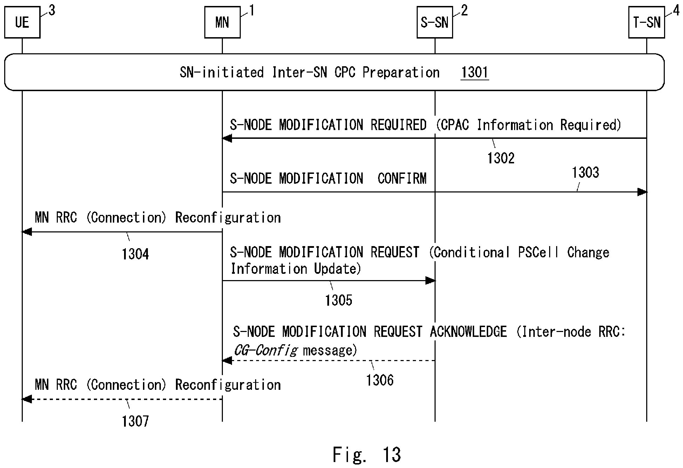

Fig. 13 shows an example of signaling related to an SN-initiated inter-SN CPC. In step 1301, an inter-SN CPC initiated by source SN 2 is prepared. Step 1302 corresponds to step 1001 in Fig. 10, step 1101 in Fig. 11, and step 1201 in Fig. 12. That is, the candidate target SN 4 sends a first message (here, an S-NODE MODIFICATION REQUIRED message) to the MN 1. The S-NODE MODIFICATION REQUIRED message contains a CPAC Information Required IE. The CPAC Information Required IE specifies an updated prepared PSCell list for the SN-initiated inter-SN CPC prepared in step 1301. The MN 1 determines whether or not to accept the updated prepared PSCell list for the inter-SN CPC. In the example in Fig. 13, the MN 1 accepts part or all of the one or more prepared PSCells proposed or requested in the updated prepared PSCell list. Step 1303 corresponds to step 1203 in Fig. 12. Specifically, the MN 1 sends an S-NODE MODIFICATION CONFIRM message to the candidate SN 4. The S-NODE MODIFICATION CONFIRM message specifies at least one accepted PSCell from among the one or more prepared PSCells requested or proposed to be added by the S-NODE MODIFICATION REQUIRED message in step 1302.

In step 1304, the MN 1 sends an MN RRC (Connection) Reconfiguration message to the UE 3. The RRC message contains the configuration (or SCG configuration) of each of the prepared PSCell(s) provided by the candidate SN 4 in the S-NODE MODIFICATION REQUIRED message in step 1302. As already explained, the configuration or SCG configuration of each prepared PSCell may be referred to as the SCG radio resource configuration. The configuration or SCG configuration of each prepared PSCell may be included in a CG-CandidateList message contained in an S-NG-RAN node to M-NG-RAN node Container IE in the S-NODE MODIFICATION REQUIRED message in step 1302. More specifically, the configuration or SCG configuration of each prepared PSCell may be included in an scg-CellGroupConfig field of a corresponding one of the one or more CG-Config IEs included in the CG-CandidateList message. The configuration or SCG configuration of each prepared PSCell may be an SN RRC Reconfiguration message, or one or more IEs (e.g., CellGroupConfig IE) contained in an SN RRC Reconfiguration message. The CellGroupConfig IE is used to configure the SCG. In addition, the RRC message contains one or more selected execution conditions for each of these prepared PSCell(s). the bearer configuration associated with each prepared PSCell may also be included in the CG-CandidateList message. More specifically, the bearer configuration associated with each prepared PSCell may be included in an scg-RB-Config field of a corresponding one of the one or more CG-Config IEs included in the CG-CandidateList message. The MN RRC message may contain the bearer configuration associated with each prepared PSCell.

Step 1305 corresponds to step 1103 in Fig. 11. That is, the MN 1 informs the source SN 2 of at least one additional prepared PSCell that has been accepted, for example, via an S-NODE MODIFICATION REQUEST message. This message may specify an updated full list of prepared PSCells. The full list may be indicated by a Conditional PSCell Change Information Update IE contained in the S-NODE MODIFICATION REQUEST message.

In step 1306, the source SN 2 may respond to the MN 1 with an S-NODE MODIFICATION REQUEST ACKNOWLEDGE message. Step 1306 may be omitted. In step 1306, the source SN 2 may provide the MN 1 with one or more CPC execution conditions for each of the added prepared PSCell(s). These execution conditions may be indicated by a CG-Config message carried by an S-NG-RAN node to M-NG-RAN node Container IE contained in the S-NODE MODIFICATION REQUEST ACKNOWLEDGE message. The CG-Config message is an inter-node RRC message sent from the source SN 2 to the MN 1.

In step 1307, the MN 1 may send an MN RRC Reconfiguration message to the UE 3. The MN RRC Reconfiguration message may indicate a modification or update of one or more execution conditions of the prepared PSCell(s). If step 1306 is omitted, or if the S-NODE MODIFICATION REQUEST ACKNOWLEDGE message in step 1306 does not indicate updated CPC execution conditions, step 1307 may be omitted.

The order of the steps shown in Fig. 13 may be modified as needed. For example, step 1304 may be performed after step 1305 or after step 1306. Step 1303 may be performed after step 1304, after step 1305, after step 1306, or after step 1307. Alternatively, step 1304 may be integrated into or replaced by step 1307.

The procedure shown in Fig. 13 can provide the following advantages. As shown in Fig. 13, sending the MN RRC (Connection) Reconfiguration message from the MN 1 to the UE 3 (step 1304), either before or without the query to the source SN 2 (step 1305), can help to ensure that the configuration (SCG configuration) and associated execution conditions of the added prepared PSCell(s) are promptly sent to the UE 3.

### Third Example Embodiment

This example embodiment provides improvements to inter-SN CPC or CPA suitable for candidate SN-triggered prepared cell addition. An example configuration of a radio communication system in this example embodiment may be the same as the example shown in Fig. 1 or 2.

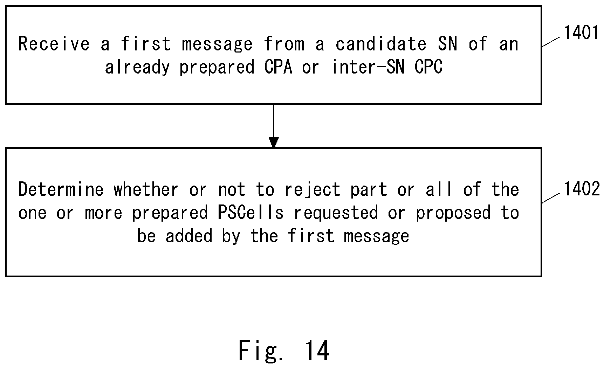

Fig. 14 shows an example of the operation of the MN 1. In step 1401, the MN 1 receives a first message from the candidate SN 4 for an already prepared CPA or inter-SN CPC. The inter-SN CPC may be an SN-initiated inter-SN CPC initiated by the MN 1 or an SN-initiated inter-SN CPC initiated by the source SN 2. As described in the first example embodiment, the first message may be a message sent by the candidate SN 4 to request or propose a modification of SN resources for the UE 3. The first message may be a message requesting or proposing an update of the prepared CPA or CPC information. The first message may be an S-NODE MODIFICATION REQUIRED message.

The first message may specify (or contain) an updated list of one or more prepared PSCells. The updated list may be referred to as the updated prepared PSCell list. The updated list may indicate the addition of at least one new prepared PSCell, the cancellation (or release) of at least one existing prepared PSCell, or both. In other words, the updated list may be a list of prepared PSCells, updated by the addition of at least one new prepared PSCell, the cancellation of at least one existing prepared PSCell, or both. The updated list may indicate the updated full list of prepared PSCells. In other words, the updated list may include newly added prepared PSCell(s) as well as existing prepared PSCell(s) that have not been canceled.

In step 1402, the MN 1 determines whether or not to reject part or all of the one or more prepared PSCells requested or proposed to be added by the first message. In other words, the MN 1 supports rejecting the addition of new prepared PSCells that resulted in the updated prepared PSCell list. In other words, the MN 1 supports accepting (or rejecting) only a portion of the addition of new prepared PSCells that resulted in the updated prepared PSCell list.

The operation shown in Fig. 14 allows the MN 1 to partially or totally reject the one or more prepared PSCells requested or proposed to be added by the candidate SN 4. A candidate PSCell(s) that was proposed to the candidate SN 4 but not prepared during the preparation of the CPA or inter-SN CPC may no longer be an appropriate candidate for the MN 1 or for the UE 3 due to a subsequent change in circumstances. According to the operation shown in Fig. 14, the MN 1 can reject a prepared PSCell(s) that is no longer appropriate. In other words, the MN 1 can reject the addition of candidate PSCell(s) that are no longer appropriate.

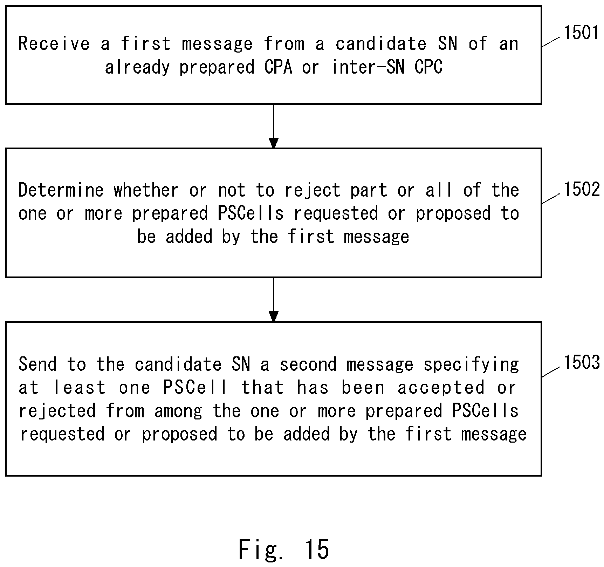

Fig. 15 shows an example of the operation of the MN 1. Steps 1501 and 1502 are similar to steps 1401 and 1402 in Fig. 14. In step 1503, the MN 1 sends to the candidate SN 4 a second message specifying at least one accepted or rejected PSCell from among the one or more prepared PSCells requested or proposed to be added by the first message. The second message may specify a full list of one or more prepared PSCells accepted by the MN 1. The second message may be an S-NODE MODIFICATION CONFIRM message or an S-NODE MODIFICATION REFUSE message.

If the second message in step 1503 is an S-NODE MODIFICATION REFUSE message, the S-NODE MODIFICATION REFUSE message may specify a new Cause value. The new Cause value may be, for example, but not limited to, "CPA-CPC resources partially (NOT) accepted". The S-NODE MODIFICATION REFUSE message may contain an M-NG-RAN node to S-NG-RAN node Container IE. The M-NG-RAN node to S-NG-RAN node Container IE contains a CG-ConfigInfo message. The CG-ConfigInfo message is an inter-node RRC message sent by the MN 1 to the candidate SN 4, and may specify the full list of one or more prepared PSCells accepted by the MN 1.

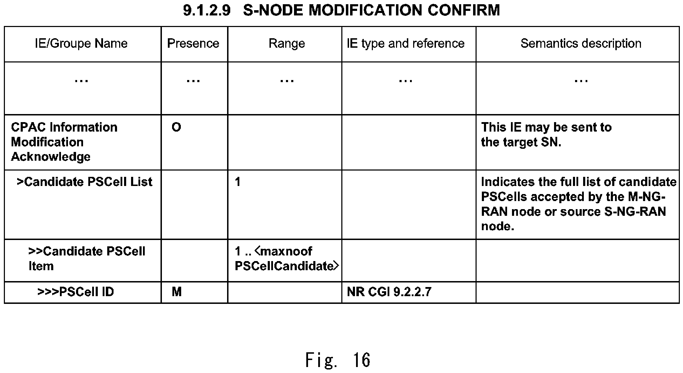

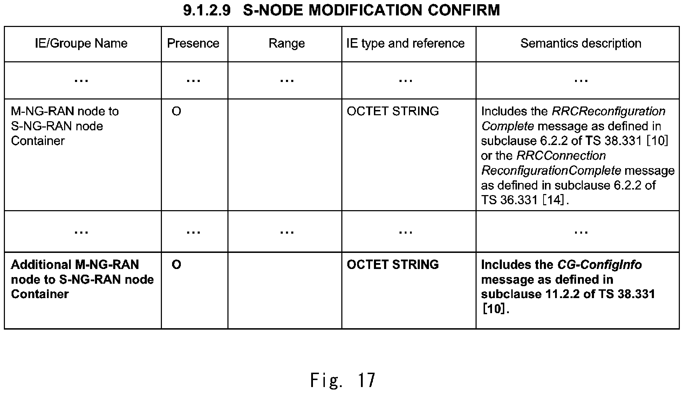

If the second message in step 1503 is an S-NODE MODIFICATION CONFIRM message, the format of the S-NODE MODIFICATION CONFIRM message may be extended as shown in Fig. 16 or 17.

In the example in Fig. 16, the S-NODE MODIFICATION CONFIRM message includes a newly defined XnAP IE to indicate the full list of one or more prepared PSCells accepted by the MN 1 or the list of one or more newly added prepared PSCell(s) accepted by the MN 1. The name of this XnAP IE may be, for example, but not limited to, "CPAC Information Modification Acknowledge" IE.

In the example in Fig. 17, the S-NODE MODIFICATION CONFIRM message contains a new XnAP IE that can include a CG-ConfigInfo message. The name of this XnAP IE may be, for example, but not limited to, "Additional M-NG-RAN node to S-NG-RAN node Container" IE. This CG-ConfigInfo message is an inter-node RRC message sent from the MN 1 to the candidate SN 4 and may indicate the full list of one or more prepared PSCells accepted by the MN 1, or may indicate the list of one or more newly added prepared PSCell(s) accepted by the MN 1.

If the MN 1 rejects all of the one or more prepared PSCells requested or proposed to be added by the first message, it may send a third message to the candidate SN 4 indicating that the modification of the CPA or CPC information requested by the first message is rejected. The third message may be an S-NODE MODIFICATION REFUSE message. The S-NODE MODIFICATION REFUSE message may specify a new Cause value. The new Cause value may be, for example, but not limited to, "CPA-CPC resources NOT accepted" or "CPA-CPC resources NOT updated".

### Fourth Example Embodiment

This example embodiment provides improvements to SN-initiated inter-SN CPC suitable for candidate SN-triggered prepared cell addition. An example configuration of a radio communication system in this example embodiment may be the same as the example shown in Fig. 1.

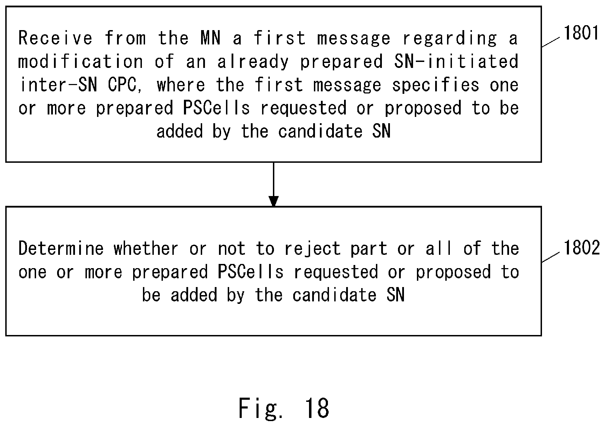

Fig. 18 shows an example of the operation of the source SN 2. In step 1801, the source SN 2 receives from the MN 1 a first message regarding a modification of an already prepared SN-initiated inter-SN CPC. The first message indicates one or more prepared PSCells requested or proposed to be added by the candidate SN 4. The first message may be a message sent by the MN 1 to request or propose a modification of SN resources for the UE 3. The first message may be a message requesting or proposing to modify or update the CPA or CPC information. The first message may be an S-NODE MODIFICATION REQUEST message.

The first message may specify (or contain) an updated list of one or more prepared PSCells. The updated list may be referred to as the updated prepared PSCell list. The updated list may indicate the addition of at least one new prepared PSCell, the cancellation (or release) of at least one existing prepared PSCell, or both. In other words, the updated list may be a list of prepared PSCells, updated by the addition of at least one new prepared PSCell, the cancellation of at least one existing prepared PSCell, or both. The updated list may indicate the updated full list of prepared PSCells. In other words, the updated list may include newly added prepared PSCell(s) as well as existing prepared PSCell(s) that have not been canceled.

In step 1802, the source SN 2 determines whether or not to reject part or all of the one or more prepared PSCells requested or proposed to be added by the candidate SN 4. In other words, the source SN 2 supports rejecting the addition of new prepared PSCells that resulted in the updated prepared PSCell list. In other words, the source SN 2 supports accepting (or rejecting) only a portion of the addition of new prepared PSCells that resulted in the updated prepared PSCell list.

The operation shown in Fig. 18 allows the source SN 2 to partially or totally reject the one or more prepared PSCells requested or proposed to be added by the candidate SN 4. A candidate PSCell(s) that was proposed to the candidate SN 4 but not prepared during the preparation of the SN-initiated inter-SN CPC may no longer be an appropriate candidate for the source SN 2 or for the UE 3 due to a subsequent change in circumstances. According to the operation shown in Fig. 18, the source SN 2 can reject a prepared PSCell(s) that is no longer appropriate.

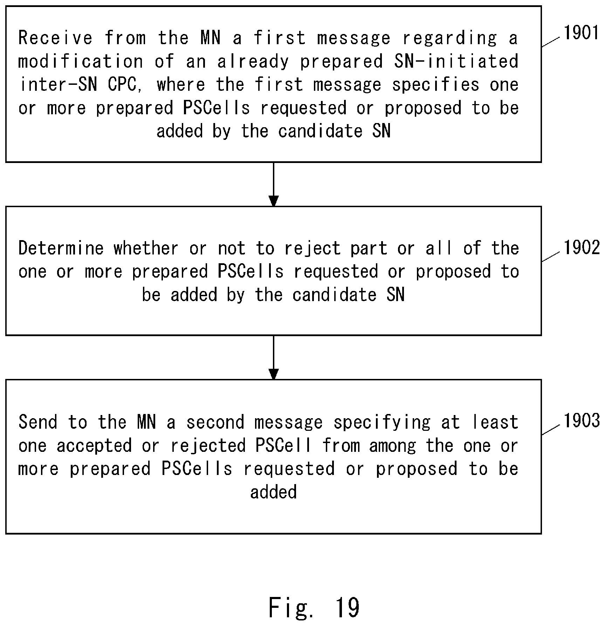

Fig. 19 shows an example of the operation of the source SN 2. Steps 1901 and 1902 are similar to steps 1801 and 1802 in Fig. 18. In step 1903, the source SN 2 sends to the MN 1 a second message specifying at least one PSCell that has been accepted or rejected from among the one or more prepared PSCells requested or proposed to be added. The second message may specify a full list of one or more prepared PSCells accepted by the source SN 2, or it may specify a list of one or more newly added prepared PSCells accepted by the source SN 2. The second message may be an S-NODE MODIFICATION REQUEST ACKNOWLEDGE message.

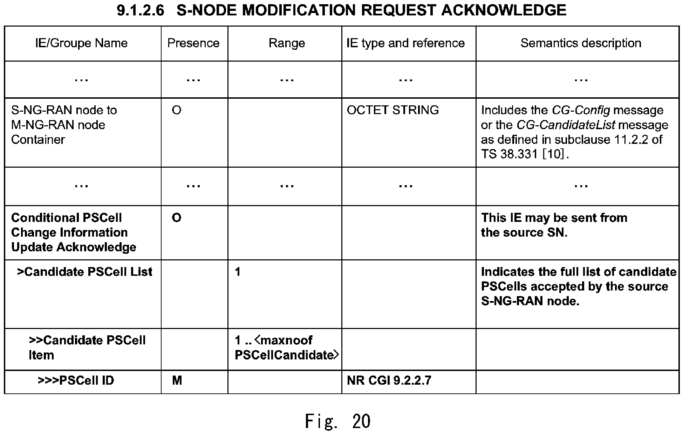

If the second message in step 1903 is an S-NODE MODIFICATION REQUEST ACKNOWLEDGE message, the format of the S-NODE MODIFICATION REQUEST ACKNOWLEDGE message may be extended as shown in Fig. 20. In the example in Fig. 20, the S-NODE MODIFICATION REQUEST ACKNOWLEDGE message includes a newly defined XnAP IE to indicate the full list of one or more prepared PSCells accepted by the source SN 2 or the list of one or more newly added prepared PSCell(s) accepted by the source SN 2. The name of this XnAP IE may be, for example, but not limited to, "Conditional PSCell Change Information Update Acknowledge" IE.

If the source SN 2 rejects all of the one or more prepared PSCells requested or proposed to be added by the first message, it may send a third message to the MN 1 indicating that the modification of the CPA or CPC information requested by the first message is rejected. The third message may be an S-NODE MODIFICATION REQUEST REJECT message. The S-NODE MODIFICATION REQUEST REJECT message may specify a new Cause value. The new Cause value may be, for example, but not limited to, "CPA-CPC resources NOT accepted" or "CPA-CPC resources NOT updated".

### Fifth Example Embodiment

This example embodiment provides improvements to SN-initiated inter-SN CPC suitable for candidate SN-triggered prepared cell addition. An example configuration of a radio communication system in this example embodiment may be the same as the example shown in Fig. 1.

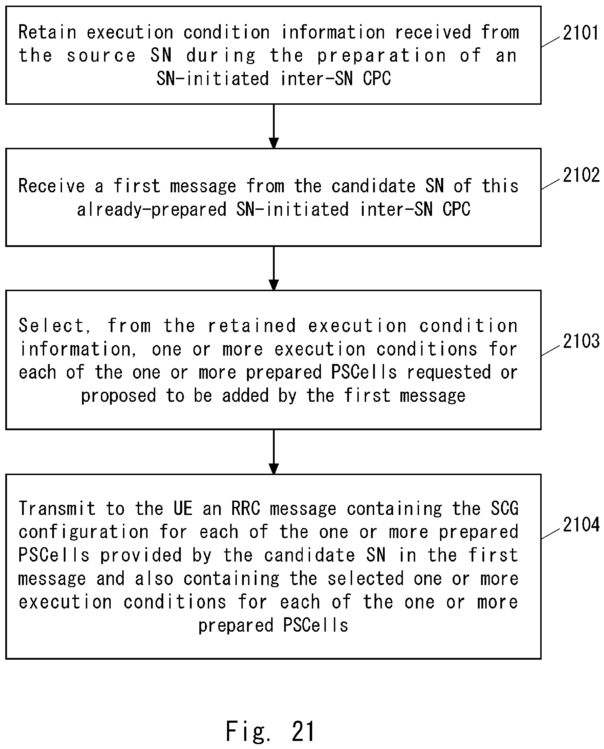

Fig. 21 shows an example of the operation of the MN 1. In step 2101, the MN 1 retains execution condition information received from the source SN 2 during the preparation of an SN-initiated inter-SN CPC. The execution condition information indicates one or more CPC execution conditions for each PSCell in the candidate PSCell list suggested by the source SN 2.

In step 2101, the MN 1 receives a first message from the candidate SN 4 of the already prepared SN-initiated inter-SN CPC. Similar to the first example embodiment, the first message may be a message sent by the candidate SN 4 to request or propose a modification of SN resources for the UE 3. The first message may be a message requesting or proposing a modification or update of the prepared CPA or CPC information. The first message may be an S-NODE MODIFICATION REQUIRED message.

The first message may specify (or contain) an updated list of one or more prepared PSCells. The updated list may be referred to as the updated prepared PSCell list. The updated list may indicate the addition of at least one new prepared PSCell, the cancellation (or release) of at least one existing prepared PSCell, or both. In other words, the updated list may be a list of prepared PSCells, updated by the addition of at least one new prepared PSCell, the cancellation of at least one existing prepared PSCell, or both. The updated list may indicate the updated full list of prepared PSCells. In other words, the updated list may include newly added prepared PSCell(s) as well as existing prepared PSCell(s) that have not been canceled.

In step 2103, the MN 1 selects (or reads or retrieves), from the retained execution condition information, one or more execution conditions for each of the one or more prepared PSCells requested or proposed to be added by the first message. The MN 1 may or may not determine whether to accept the one or more prepared PSCells requested or proposed to be added by the first message. In other words, the MN 1 may accept all the PSCell(s) requested or proposed to be added by the candidate SN 4. More specifically, the MN 1 may accept all the PSCell(s) requested or proposed to be added by the candidate SN 4, as long as they are included in the candidate PSCell list suggested by the source SN 2.

In step 2104, the MN 1 transmits to the UE 3 an RRC message containing the SCG configuration for each of the prepared PSCell(s) provided by the candidate SN 4 in the first message and also containing the selected one or more execution conditions for each of these prepared PSCell(s). The RRC message may be an MN RRC (Connection) Reconfiguration message.

According to this operation shown in Fig. 21, when a prepared PSCell(s) is added with respect to an inter-SN CPC based on the request of the candidate SN 4, the MN 1 does not need to query the source SN 2 for the execution conditions associated with the added prepared PSCell(s). Thus, the MN 1 can immediately provide the UE 3 with the configuration (SCG configuration) and execution conditions of the added prepared PSCell(s).

### Another Example Embodiment 1

The MN 1 or the source SN 2 may send information to the candidate SN 4 in advance indicating whether or not the candidate SN 4 is allowed to propose the addition of a new prepared PSCell. This information may be sent to the candidate SN 4 during the preparation of an inter-SN CPC. In the case of an MN-initiated inter-SN CPC, the MN 1 may send this information to the candidate SN 4. The MN 1 may send this information to the candidate SN 4, for example, in an S-NODE ADDITION REQUEST message or an S-NODE MODIFICATION REQUEST message. In the case of an SN-initiated inter-SN CPC, the source SN 2 may send this information to the candidate SN 4 via the MN 1. The SN 2 may send this information to the MN 1, for example in an S-NODE CHANGE REQUIRED message or an S-NODE MODIFICATION REQUEST ACKNOWLEDGE message. Alternatively, even in the case of an SN-initiated inter-SN CPC, the MN 1 may send this information to the candidate SN 4 based on its own decision. The candidate SN 4 may initiate any of the procedures described in the above example embodiments only if the proposal to add a new prepared PSCell is allowed.

### Another Example Embodiment 2

As already described in the above example embodiments, in some implementations, the MN 1 or the source SN 2 may not necessarily support partial acceptance of a request or proposal to add prepared PSCells (or to update the prepared PSCell list). For example, if even one of a plurality of prepared PSCells requested or proposed to be added by the candidate SN 4 is unacceptable, the MN 1 or the source SN 2 may reject the addition of all of the plurality of prepared PSCells.

### Another Example Embodiment 3

If the candidate SN 4 requests or proposes to add prepared PSCell(s) and cancel prepared PSCell(s) simultaneously in a single message (e.g., S-NODE MODIFICATION REQUIRED message), the total number of prepared PSCells may temporarily exceed the maximum number of PSCells that the candidate SN 4 is allowed to prepare. The maximum number of PSCells is determined by the node initiating the inter-SN CPC, i.e., by the MN 1 in the case of MN-initiated inter-SN CPC and by the source SN 2 in the case of SN-initiated inter-SN CPC. In some implementations, such a temporary exceeding of the maximum number may be allowed as long as the number of prepared PSCells after the additions and deletions requested in the single message does not exceed the maximum number. If the size of the updated full list of prepared PSCells received from the candidate SN 4 does not exceed the maximum number, the MN 1 or the source SN 2 may accept the proposed or requested updates (i.e., addition of prepared PSCell(s) and cancellation of prepared PSCell(s)) in this list.

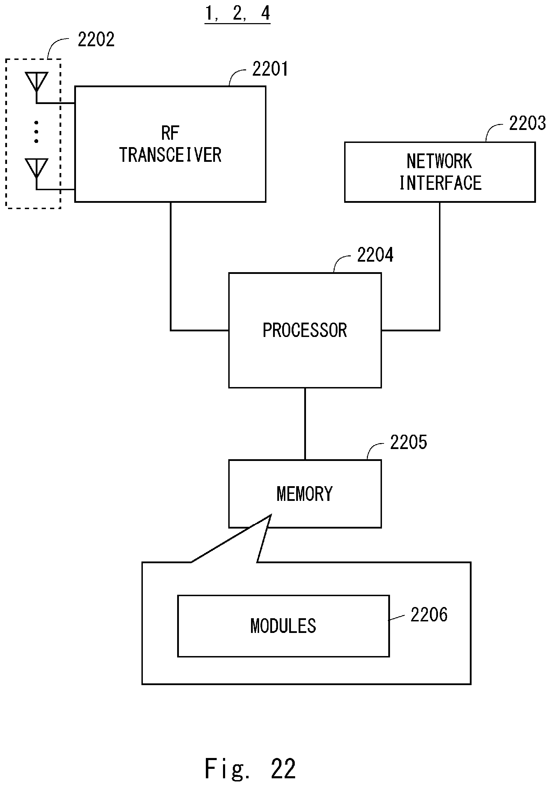

Examples of configurations of the RAN nodes 1, 2 and 4 and the UE 3 according to the plurality of example embodiments described above are provided below. Fig. 22 is a block diagram showing an example of the configuration of the RAN node 1. The configuration of the RAN nodes 2 and 4 may be the same as the configuration shown in Fig. 22. Referring to Fig. 22, the RAN node 2 includes a Radio Frequency (RF) transceiver 2201, a network interface 2203, a processor 2204, and a memory 2205. The RF transceiver 2201 performs analog RF signal processing to communicate with UEs including the UE 3. The RF transceiver 2201 may include a plurality of transceivers. The RF transceiver 2201 is coupled to an antenna array 2202 and the processor 2204. The RF transceiver 2201 receives modulated symbol data from the processor 2204, generates a transmission RF signal, and supplies the transmission RF signal to the antenna array 2202. The RF transceiver 2201 generates a baseband reception signal based on a reception RF signal received by the antenna array 2202 and supplies the baseband reception signal to the processor 2204. The RF transceiver 2201 may include an analog beamformer circuit for beamforming. The analog beamformer circuit includes, for example, a plurality of phase shifters and a plurality of power amplifiers.

The network interface 2203 is used to communicate with network nodes (e.g., RAN nodes 2 and 4, and control and forwarding nodes in the core network). For example, the network interface 2203 may include a network interface card (NIC) that complies with the IEEE 802.3 series.

The processor 2204 performs digital baseband signal processing (data plane processing) and control plane processing for wireless communication. The processor 2204 may include a plurality of processors. For example, the processor 2204 may include a modem processor (e.g., a Digital Signal Processor (DSP)) that performs digital baseband signal processing and a protocol stack processor (e.g., a Central Processing Unit (CPU) or a Micro Processing Unit (MPU)) that performs control plane processing.

For example, the digital baseband signal processing performed by the processor 2204 may include signal processing for the Service Data Adaptation Protocol (SDAP), Packet Data Convergence Protocol (PDCP), Radio Link Control (RLC), Medium Access Control (MAC), and Physical (PHY) layers. The control plane processing by the processor 2204 may also include processing of Non-Access Stratum (NAS) messages, RRC messages, MAC Control Elements (CEs), and Downlink Control Information (DCI).

The processor 2204 may include a digital beamformer module for beamforming. The digital beamformer module may include a multiple input multiple output (MIMO) encoder and precoder.

The memory 2205 is composed of a combination of volatile and non-volatile memory. The volatile memory is, for example, Static Random Access Memory (SRAM), Dynamic RAM (DRAM), or a combination thereof. The non-volatile memory is Mask Read Only Memory (MROM), Electrically Erasable Programmable ROM (EEPROM), flash memory, hard disk drive, or any combination thereof. The memory 2205 may include storage that is remote from the processor 2204. In this case, the processor 2204 may access the memory 2205 through a network interface 2203 or an I/O interface not shown.

The memory 2205 may store one or more software modules (or computer programs) 2206 containing a set of instructions and data for processing by the RAN node 1 described in the example embodiments described above. In some implementations, the processor 2204 may be configured to read and execute the software module 2206 from the memory 2205, thereby performing the processing of the RAN node 1 described in the example embodiments described above.

If the RAN Node 1 is a CU (e.g., eNB-CU or gNB-CU) or a CU-CP, the RAN Node 1 does not need to include the RF transceiver 2201 (and the antenna array 2202).

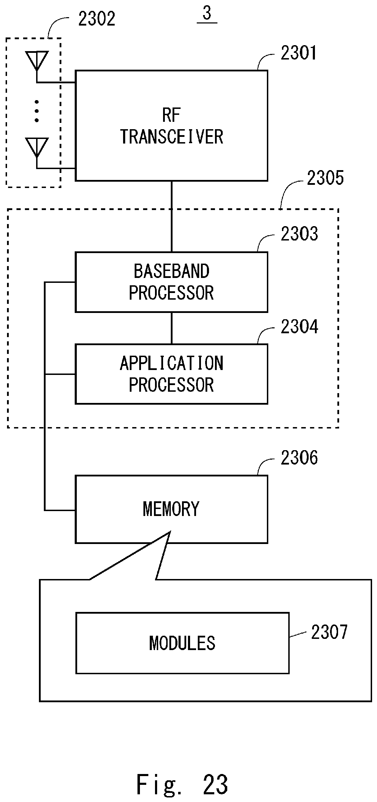

Fig. 23 shows a block diagram of an example configuration of the UE 3. The Radio Frequency (RF) transceiver 2301 performs analog RF signal processing to communicate with the RAN nodes 1, 2 and 4. The RF transceiver 2301 may include a plurality of transceivers. The analog RF signal processing performed by the RF transceiver 2301 includes frequency up-conversion, frequency down-conversion, and amplification. The RF transceiver 2301 is coupled with an antenna array 2302 and a baseband processor 2303. The RF transceiver 2301 receives modulated symbol data (or OFDM symbol data) from the baseband processor 2303, generates a transmission RF signal, and supplies the transmission RF signal to the antenna array 2302. The RF transceiver 2301 also generates a baseband received signal based on a received RF signal received by the antenna array 2302, and supplies the baseband received signal to the baseband processor 2303. The RF transceiver 2301 may include an analog beamformer circuit for beamforming. The analog beamformer circuit includes, for example, multiple phase shifters and multiple power amplifiers.

The baseband processor 2303 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 2303 may include signal processing for the SDAP, PDCP, RLC, MAC, and PHY layers. The control plane processing by the baseband processor 2303 may include processing of Non-Access Stratum (NAS) protocols, RRC protocols, MAC CEs, and DCIs.

The baseband processor 2303 may perform MIMO encoding and precoding for beamforming.

The baseband processor 2303 may include a modem processor (e.g., DSP) that performs digital baseband signal processing and a protocol stack processor (e.g., CPU or MPU) that performs control plane processing. In this case, the protocol stack processor that performs control plane processing may be integrated with an application processor 2304 described later.

The application processor 2304 is also referred to as a CPU, MPU, microprocessor, or processor core. The application processor 2304 may include a plurality of processors (a plurality of processor cores). The application processor 2304 executes system software programs (operating system (OS)) and various application programs (e.g., voice call application, web browser, mailer, camera control application, music player application) read from a memory 2306 or other memory not shown, thereby realizing various functions of the UE 3.

In some implementations, as shown by the dashed line (2305) in Fig. 23, the baseband processor 2303 and the application processor 2304 may be integrated on a single chip. In other words, the baseband processor 2303 and the application processor 2304 may be implemented as a single System on Chip (SoC) device 2305. The SoC device may also be referred to as a system large-scale integration (LSI) or chipset.

The memory 2306 is a volatile memory, a non-volatile memory, or a combination thereof. The memory 2306 may include a plurality of physically independent memory devices. The volatile memory is, for example, SRAM, DRAM, or a combination thereof. The non-volatile memory is, for example, MROM, EEPROM, flash memory, or a hard disk drive, or any combination thereof. For example, the memory 2306 may include an external memory device that is accessible by the baseband processor 2303, the application processor 2304, and the SoC 2305. The memory 2306 may include an internal memory device that is integrated into the baseband processor 2303, the application processor 2304, or the SoC 2305. In addition, the memory 2306 may include memory within a Universal Integrated Circuit Card (UICC).

The memory 2306 may store one or more software modules (or computer programs) 2307 that include a set of instructions and data for performing the processing by the radio terminal 3 described in the above example embodiments. In some implementations, the baseband processor 2303 or the application processor 2304 may be configured to read and execute the software modules 2307 from the memory 2306, thereby performing the processing of the UE 3 as described in the example embodiments with reference to the drawings.

The control plane processing and operations performed by the UE 3 described in the above example embodiment can be implemented by elements other than the RF transceiver 2301 and the antenna array 2302, namely at least one of the baseband processor 2303 and the application processor 2304, and the memory 2306 that stores the software modules 2307.

As described using Figs. 22 and 23, each of the processors in the RAN nodes 1, 2 and 4 and UE 3 according to the example embodiments described above can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The example embodiments described above are merely examples of applications of the technical ideas of the inventors. These technical ideas are not limited to the above-described example embodiments, and various modifications may be made thereto.

For example, the whole or part of the example embodiments disclosed above can be described as, but not limited to, the following supplementary notes.

### (Supplementary Note 1)

A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   receive a first message from a candidate Secondary Node (SN), the candidate SN being common to both a first conditional Primary Secondary Cell Group (SCG) Cell (PSCell) change initiated by the MN and a second conditional PSCell change initiated by a source SN; and
   determine which of the first conditional PSCell change or the second conditional PSCell change an updated list of one or more prepared PSCells specified by the first message relates to.

### (Supplementary Note 2)

The RAN node according to Supplementary Note 1, wherein the at least one processor is configured to determine which of the first conditional PSCell change or the second conditional PSCell change the updated list relates to, based on the updated list itself, based on an inter-node Radio Resource Control (RRC) message included in the first message, or based on both.

### (Supplementary Note 3)

The RAN node according to Supplementary Note 2, wherein the at least one processor is configured to determine which of the first conditional PSCell change or the second conditional PSCell change the updated list relates to, based on which of a first suggested PSCell list for the first conditional PSCell change or a second suggested PSCell list for the second conditional PSCell change contains the one or more prepared PSCells included in the updated list.

### (Supplementary Note 4)

The RAN node according to Supplementary Note 2 or 3, wherein the at least one processor is configured to:
check a list of prepared PSCells to be released indicated by the inter-node RRC message; and
determine which of the first conditional PSCell change or the second conditional PSCell change the updated list relates to, based on which of the first conditional PSCell change or the second conditional PSCell change one or more cell identifiers included in the list of prepared PSCells to be released relate to.

### (Supplementary Note 5)

The RAN node according to any one of Supplementary Notes 2 to 4, wherein the at least one processor is configured to, if it cannot determine which of the first conditional PSCell change or the second conditional PSCell change the updated list relates to using the updated list itself or the inter-node RRC message or both, autonomously determine which of the first conditional PSCell change or the second conditional PSCell change the updated list relates to.

### (Supplementary Note 6)

The RAN node according to Supplementary Note 5, wherein the at least one processor is configured to determine that the updated list relates to either the first conditional PSCell change or the second conditional PSCell change which has a greater maximum number of SCells that the candidate SN is allowed to prepare.

### (Supplementary Note 7)

The RAN node according to Supplementary Note 5, wherein the at least one processor is configured to determine that the updated list relates to either the first conditional PSCell change or the second conditional PSCell change which has a smaller maximum number of SCells that the candidate SN is allowed to prepare.

### (Supplementary Note 8)

The RAN node according to any one of Supplementary Notes 2 to 4, wherein the at least one processor is configured to, if all PSCells in the updated list are commonly included in both the first suggested PSCell list and the second suggested PSCell list, autonomously determine which of the first conditional PSCell change or the second conditional PSCell change the updated list relates to.

### (Supplementary Note 9)

The RAN node according to Supplementary Note 1, wherein
the first message includes an information element or field indicating which of the first conditional PSCell change or the second conditional PSCell change a modification of a conditional PSCell addition or change information requested by the first message is associated with, and
the at least one processor is configured to determine which of the first conditional PSCell change or the second conditional PSCell change the updated list relates to, based on the information element or field.

### (Supplementary Note 10)

The RAN node according to Supplementary Note 9, wherein the information element or field explicitly indicates whether a node that has initiated a conditional PSCell change is the MN or the source SN.

### (Supplementary Note 11)

The RAN node according to Supplementary Note 9 or 10, wherein the information element or field is a field in an inter-node Radio Resource Control (RRC) message included in the first message.

### (Supplementary Note 12)

The RAN node according to any one of Supplementary Notes 1 to 11, wherein the at least one processor is configured to accept the updated list if a number of prepared PSCells included in the updated list does not exceed a maximum number predetermined by the MN or the source SN.

### (Supplementary Note 13)

The RAN node according to any one of Supplementary Notes 1 to 12, wherein the updated list indicates an addition of at least one new prepared PSCell, a cancellation of at least one existing prepared PSCell, or both.

### (Supplementary Note 14)

The RAN node according to any one of Supplementary Notes 1 to 13, wherein the first message is an S-NODE MODIFICATION REQUIRED message.

### (Supplementary Note 15)

The RAN node according to any one of Supplementary Notes 1 to 14, wherein the at least one processor is configured to, if the updated list relates to the second conditional PSCell change, determine whether or not to accept an addition of one or more prepared PSCells requested or proposed by the first message, with respect to the second conditional PSCell change.

### (Supplementary Note 16)

The RAN node according to any one of Supplementary Notes 1 to 15, wherein the at least one processor is configured to determine whether to reject part or all of the one or more prepared PSCells requested or proposed to be added by the first message.

### (Supplementary Note 17)

The RAN node according to Supplementary Note 15 or 16, wherein the at least one processor is configured to, if the updated list relates to the second conditional PSCell change and if an addition of part or all of the one or more prepared PSCells is accepted, inform the source SN via a second message of at least one additional prepared PSCell that has been accepted.

### (Supplementary Note 18)

The RAN node according to Supplementary Note 17, wherein the second message is an S-NODE MODIFICATION REQUEST message.

### (Supplementary Note 19)

The RAN node according to any one of Supplementary Notes 15 to 18, wherein the at least one processor is configured to send to the candidate SN a third message specifying at least one accepted or rejected PSCell from among the one or more prepared PSCells requested or proposed to be added by the first message.

### (Supplementary Note 20)

The RAN node according to Supplementary Note 19, wherein
the first message indicates an updated full list of prepared PSCells prepared by the candidate SN, including the one or more prepared PSCells requested or proposed to be added by the first message, and
the third message indicates a full list of accepted one or more prepared PSCells.

### (Supplementary Note 21)

The RAN node according to Supplementary Note 19 or 20, wherein the third message is an S-NODE MODIFICATION CONFIRM message or an S-NODE MODIFICATION REFUSE message.

### (Supplementary Note 22)

The RAN node according to any one of Supplementary Notes 15 to 21, wherein the at least one processor is configured to, if all of the one or more prepared PSCells requested or proposed to be added by the first message are rejected, send to the candidate SN a fourth message indicating that a modification of a conditional PSCell addition or change information requested by the first message is rejected.

### (Supplementary Note 23)

The RAN node according to Supplementary Note 22, wherein the fourth message is an S-NODE MODIFICATION REFUSE message.

### (Supplementary Note 24)

The RAN node according to any one of Supplementary Notes 15 to 21, wherein the at least one processor is configured to:
retain execution condition information received from the source SN in a preparation of the second conditional PSCell change;
select, from the retained execution condition information, one or more execution conditions for each of the one or more prepared PSCells requested or proposed to be added by the first message; and
transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

### (Supplementary Note 25)

A method performed by a radio access network (RAN) node configured to operate as a Master Node (MN) associated with a Master Cell Group (MCG) in dual connectivity for a User Equipment (UE), the method comprising:
receiving a first message from a candidate Secondary Node (SN), the candidate SN being common to both a first conditional Primary Secondary Cell Group (SCG) Cell (PSCell) change initiated by the MN and a second conditional PSCell change initiated by a source SN; and
determining which of the first conditional PSCell change or the second conditional PSCell change an updated list of one or more prepared PSCells indicated by the first message relates to.

### (Supplementary Note 26)

A program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate Secondary Node (SN), the candidate SN being common to both a first conditional Primary Secondary Cell Group (SCG) Cell (PSCell) change initiated by the MN and a second conditional PSCell change initiated by a source SN; and
determining which of the first conditional PSCell change or the second conditional PSCell change an updated list of one or more prepared PSCells indicated by the first message relates to.

### (Supplementary Note 27)

A radio access network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
   prepare SN resources for the UE with respect to both a first conditional Primary SCG Cell (PSCell) change initiated by a Master Node (MN) and a second conditional PSCell change initiated by a source SN; and
   send a first message to the MN,
wherein the first message includes an information element or field indicating which of the first conditional PSCell change or the second conditional PSCell change a modification of a conditional PSCell addition or change information requested by the first message is associated with.

### (Supplementary Note 28)

The RAN node according to Supplementary Note 27, wherein the information element or field explicitly indicates whether a source node of a conditional PSCell change is the MN or the source SN.

### (Supplementary Note 29)

The RAN node according to Supplementary Note 27 or 28, wherein the information element or field is a field in an inter-node Radio Resource Control (RRC) message included in the first message.

### (Supplementary Note 30)

A method performed by a radio access network (RAN) node configured to operate as a candidate Secondary Node (SN) associated with a Secondary Cell Group (SCG) in dual connectivity for a User Equipment (UE), the method comprising:
preparing SN resources for the UE with respect to both a first conditional Primary SCG Cell (PSCell) change initiated by a Master Node (MN) and a second conditional PSCell change initiated by a source SN; and
sending a first message to the MN,
wherein the first message includes an information element or field indicating which of the first conditional PSCell change or the second conditional PSCell change a modification of a conditional PSCell addition or change information requested by the first message is associated with.

### (Supplementary Note 31)

A program for causing a computer to perform a method for a radio access network (RAN) node configured to operate as a candidate Secondary Node (SN) associated with a Secondary Cell Group (SCG) in dual connectivity for a User Equipment (UE), the method comprising:
preparing SN resources for the UE with respect to both a first conditional Primary SCG Cell (PSCell) change initiated by a Master Node (MN) and a second conditional PSCell change initiated by a source SN; and
sending a first message to the MN,
wherein the first message includes an information element or field indicating which of the first conditional PSCell change or the second conditional PSCell change a modification of a conditional PSCell addition or change information requested by the first message is associated with.

### (Supplementary Note 32)

A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   receive a first message from a candidate Secondary Node (SN) of a conditional Primary Secondary Cell Group (SCG) Cell (PSCell) change initiated by a source SN; and
   determine whether or not to accept an addition of one or more prepared PSCells requested or proposed by the first message, with respect to the conditional PSCell change initiated by the source SN.

### (Supplementary Note 33)

The RAN node according to Supplementary Note 32, wherein the at least one processor is configured to determine whether to reject part or all of the one or more prepared PSCells requested or proposed to be added by the first message.

### (Supplementary Note 34)

The RAN node according to Supplementary Note 32 or 33, wherein the first message is an S-NODE MODIFICATION REQUIRED message.

### (Supplementary Note 35)

The RAN node according to any one of Supplementary Notes 32 to 34, wherein the at least one processor is configured to, if an addition of part or all of the one or more prepared PSCells is accepted, inform the source SN via a second message of at least one additional prepared PSCell that has been accepted.

### (Supplementary Note 36)

The RAN node according to Supplementary Note 35, wherein the second message is an S-NODE MODIFICATION REQUEST message.

### (Supplementary Note 37)

The RAN node according to any one of Supplementary Notes 32 to 36, wherein the at least one processor is configured to send to the candidate SN a third message specifying at least one accepted or rejected PSCell from among the one or more prepared PSCells requested or proposed to be added by the first message.

### (Supplementary Note 38)

The RAN node according to Supplementary Note 37, wherein
the first message indicates an updated full list of prepared PSCells prepared by the candidate SN, including the one or more prepared PSCells requested or proposed to be added by the first message, and
the third message indicates a full list of accepted one or more prepared PSCells.

### (Supplementary Note 39)

The RAN node according to Supplementary Note 37 or 38, wherein the third message is an S-NODE MODIFICATION CONFIRM message or an S-NODE MODIFICATION REFUSE message.

### (Supplementary Note 40)

The RAN node according to any one of Supplementary Notes 32 to 39, wherein the at least one processor is configured to, if all of the one or more prepared PSCells requested or proposed to be added by the first message are rejected, send to the candidate SN a fourth message indicating that a modification of a conditional PSCell addition or change information requested by the first message is rejected.

### (Supplementary Note 41)

The RAN node according to Supplementary Note 40, wherein the fourth message is an S-NODE MODIFICATION REFUSE message.

### (Supplementary Note 42)

The RAN node according to any one of Supplementary Notes 32 to 39, wherein the at least one processor is configured to:
retain execution condition information received from the source SN in a preparation of the conditional PSCell change;
select, from the retained execution condition information, one or more execution conditions for each of the one or more prepared PSCells requested or proposed to be added by the first message; and
transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

### (Supplementary Note 43)

A method performed by a radio access network (RAN) node configured to operate as a Master Node (MN) associated with a Master Cell Group (MCG) in dual connectivity for a User Equipment (UE), the method comprising:
receiving a first message from a candidate Secondary Node (SN) of a conditional Primary Secondary Cell Group (SCG) Cell (PSCell) change initiated by a source SN; and
determining whether or not to accept an addition of one or more prepared PSCells requested or proposed by the first message, with respect to the conditional PSCell change initiated by the source SN.

### (Supplementary Note 44)

A program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate Secondary Node (SN) of a conditional Primary Secondary Cell Group (SCG) Cell (PSCell) change initiated by a source SN; and
determining whether or not to accept an addition of one or more prepared PSCells requested or proposed by the first message, with respect to the conditional PSCell change initiated by the source SN.

### (Supplementary Note 45)

A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   receive a first message from a candidate SN of a conditional Primary Secondary Cell Group (SCG) Cell (PSCell) addition or a conditional PSCell change; and
   determine whether or not to reject part or all of one or more prepared PSCells requested or proposed to be added by the first message.

### (Supplementary Note 46)

The RAN node according to Supplementary Note 45, wherein the at least one processor is configured to send to the candidate SN a second message specifying at least one accepted or rejected PSCell from among the one or more prepared PSCells requested or proposed to be added by the first message.

### (Supplementary Note 47)

The RAN node according to Supplementary Note 46, wherein
the first message indicates an updated full list of prepared PSCells prepared by the candidate SN, including the one or more prepared PSCells requested or proposed to be added by the first message, and
the second message indicates a full list of accepted one or more prepared PSCells.

### (Supplementary Note 48)

The RAN node according to Supplementary Note 46 or 47, wherein
the first message is an S-NODE MODIFICATION REQUIRED message, and
the second message is an S-NODE MODIFICATION CONFIRM message or an S-NODE MODIFICATION REFUSE message.

### (Supplementary Note 49)

The RAN node according to any one of Supplementary Notes 45 to 48, wherein the at least one processor is configured to, if all of the one or more prepared PSCells requested or proposed to be added by the first message are rejected, send to the candidate SN a third message indicating that a modification of a conditional PSCell addition or change information requested by the first message is rejected.

### (Supplementary Note 50)

The RAN node according to Supplementary Note 49, wherein the third message is an S-NODE MODIFICATION REFUSE message.

### (Supplementary Note 51)

The RAN node according to any one of Supplementary Notes 45 to 50, wherein the conditional PSCell change is a conditional PSCell change initiated by the MN.

### (Supplementary Note 52)

A method performed by a radio access network (RAN) node configured to operate as a Master Node (MN) associated with a Master Cell Group (MCG) in dual connectivity for a User Equipment (UE), the method comprising:
receiving a first message from a candidate SN of a conditional Primary Secondary Cell Group (SCG) Cell (PSCell) addition or a conditional PSCell change; and
determining whether or not to reject part or all of one or more prepared PSCells requested or proposed to be added by the first message.

### (Supplementary Note 53)

A program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate SN of a conditional Primary Secondary Cell Group (SCG) Cell (PSCell) addition or a conditional PSCell change; and
determining whether or not to reject part or all of one or more prepared PSCells requested or proposed to be added by the first message.

### (Supplementary Note 54)

A radio access network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
   receive from a Master Node (MN) a first message regarding a conditional Primary SCG Cell (PSCell) change initiated by the source SN that has already been prepared, the first message specifying one or more prepared PSCells requested or proposed to be added by the candidate SN; and
   determine whether or not to reject part or all of the one or more prepared PSCells requested or proposed to be added by the candidate SN.

### (Supplementary Note 55)

The RAN node according to Supplementary Note 54, wherein the at least one processor is configured to send to the MN a second message specifying at least one accepted or rejected PSCell from among the one or more prepared PSCells.

### (Supplementary Note 56)

The RAN node according to Supplementary Note 55, wherein
the first message indicates an updated full list of prepared PSCells prepared by the candidate SN, including the one or more prepared PSCells, and
the second message indicates a full list of accepted one or more prepared PSCells.

### (Supplementary Note 57)

The RAN node according to Supplementary Note 55 or 56, wherein
the first message is an S-NODE MODIFICATION REQUEST message, and
the second message is an S-NODE MODIFICATION REQUEST ACKNOWLEDGE message.

### (Supplementary Note 58)

The RAN node according to any one of Supplementary Notes 54 to 57, wherein the at least one processor is configured to, if all of the one or more prepared PSCells are rejected, send to the MN a third message indicating that a modification requested by the first message is rejected.

### (Supplementary Note 59)

The RAN node according to Supplementary Note 58, wherein the third message is an S-NODE MODIFICATION REQUEST REJECT message.

### (Supplementary Note 60)

A method performed by a radio access network (RAN) node configured to operate as a source Secondary Node (SN) associated with a Secondary Cell Group (SCG) in dual connectivity for a User Equipment (UE), the method comprising:
receiving from a Master Node (MN) a first message regarding a conditional Primary SCG Cell (PSCell) change initiated by the source SN that has already been prepared, the first message specifying one or more prepared PSCells requested or proposed to be added by the candidate SN; and
determining whether or not to reject part or all of the one or more prepared PSCells requested or proposed to be added by the candidate SN.

### (Supplementary Note 61)

A program for causing a computer to perform a method for a radio access network (RAN) node configured to operate as a source Secondary Node (SN) associated with a Secondary Cell Group (SCG) in dual connectivity for a User Equipment (UE), the method comprising:
receiving from a Master Node (MN) a first message regarding a conditional Primary SCG Cell (PSCell) change initiated by the source SN that has already been prepared, the first message specifying one or more prepared PSCells requested or proposed to be added by the candidate SN; and
determining whether or not to reject part or all of the one or more prepared PSCells requested or proposed to be added by the candidate SN.

### (Supplementary Note 62)

A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   retain execution condition information received from a source Secondary Node (SN) in a preparation of a conditional Primary Secondary Cell Group (SCG) Cell (PSCell) change initiated by the source SN;
   receive a first message from a candidate SN of the conditional SN change that has already been prepared;
   select, from the retained execution condition information, one or more execution conditions for each of one or more prepared PSCells requested or proposed to be added by the first message; and
   transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

### (Supplementary Note 63)

A method performed by a radio access network (RAN) node configured to operate as a Master Node (MN) associated with a Master Cell Group (MCG) in dual connectivity for a User Equipment (UE), the method comprising:
retaining execution condition information received from a source Secondary Node (SN) in a preparation of a conditional Primary Secondary Cell Group (SCG) Cell (PSCell) change initiated by the source SN;
receiving a first message from a candidate SN of the conditional SN change that has already been prepared;
selecting, from the retained execution condition information, one or more execution conditions for each of one or more prepared PSCells requested or proposed to be added by the first message; and
transmitting a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

### (Supplementary Note 64)

A program for causing a computer to perform a method for a radio access network (RAN) node configured to operate as a Master Node (MN) associated with a Master Cell Group (MCG) in dual connectivity for a User Equipment (UE), the method comprising:
retaining execution condition information received from a source Secondary Node (SN) in a preparation of a conditional Primary Secondary Cell Group (SCG) Cell (PSCell) change initiated by the source SN;
receiving a first message from a candidate SN of the conditional SN change that has already been prepared;
selecting, from the retained execution condition information, one or more execution conditions for each of one or more prepared PSCells requested or proposed to be added by the first message; and
transmitting a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

This application is based upon and claims the benefit of priority from Japanese Patent Application No. 2022-112409, filed on July 13, 2022, the disclosure of which is incorporated herein in its entirety by reference.

### Reference Signs List

- 1: Master Node (MN)
- 2: Source Secondary Node (S-SN)
- 3: User Equipment (UE)
- 4: Target Secondary Node (T-SN)
- 2204: Processor
- 2205: Memory
- 2206: Modules
- 2303: Baseband processor
- 2304: Application processor
- 2306: Memory
- 2307: Modules

## Claims

1. A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
receive a first message from a candidate Secondary Node (SN), the candidate SN being common to both a first conditional Primary Secondary Cell Group (SCG) Cell (PSCell) change initiated by the MN and a second conditional PSCell change initiated by a source SN; and
determine which of the first conditional PSCell change or the second conditional PSCell change an updated list of one or more prepared PSCells specified by the first message relates to.

2. The RAN node according to claim 1, wherein the at least one processor is configured to determine which of the first conditional PSCell change or the second conditional PSCell change the updated list relates to, based on the updated list itself, based on an inter-node Radio Resource Control (RRC) message included in the first message, or based on both.

3. The RAN node according to claim 2, wherein the at least one processor is configured to determine which of the first conditional PSCell change or the second conditional PSCell change the updated list relates to, based on which of a first suggested PSCell list for the first conditional PSCell change or a second suggested PSCell list for the second conditional PSCell change contains the one or more prepared PSCells included in the updated list.

4. The RAN node according to claim 2 or 3, wherein the at least one processor is configured to:
check a list of prepared PSCells to be released indicated by the inter-node RRC message; and
determine which of the first conditional PSCell change or the second conditional PSCell change the updated list relates to, based on which of the first conditional PSCell change or the second conditional PSCell change one or more cell identifiers included in the list of prepared PSCells to be released relate to.

5. The RAN node according to any one of claims 2 to 4, wherein the at least one processor is configured to, if it cannot determine which of the first conditional PSCell change or the second conditional PSCell change the updated list relates to using the updated list itself or the inter-node RRC message or both, autonomously determine which of the first conditional PSCell change or the second conditional PSCell change the updated list relates to.

6. The RAN node according to claim 5, wherein the at least one processor is configured to determine that the updated list relates to either the first conditional PSCell change or the second conditional PSCell change which has a greater maximum number of SCells that the candidate SN is allowed to prepare.

7. The RAN node according to claim 5, wherein the at least one processor is configured to determine that the updated list relates to either the first conditional PSCell change or the second conditional PSCell change which has a smaller maximum number of SCells that the candidate SN is allowed to prepare.

8. The RAN node according to any one of claims 2 to 4, wherein the at least one processor is configured to, if all PSCells in the updated list are commonly included in both the first suggested PSCell list and the second suggested PSCell list, autonomously determine which of the first conditional PSCell change or the second conditional PSCell change the updated list relates to.

9. The RAN node according to claim 1, wherein
the first message includes an information element or field indicating which of the first conditional PSCell change or the second conditional PSCell change a modification of a conditional PSCell addition or change information requested by the first message is associated with, and
the at least one processor is configured to determine which of the first conditional PSCell change or the second conditional PSCell change the updated list relates to, based on the information element or field.

10. The RAN node according to claim 9, wherein the information element or field explicitly indicates whether a node that has initiated a conditional PSCell change is the MN or the source SN.

11. The RAN node according to claim 9 or 10, wherein the information element or field is a field in an inter-node Radio Resource Control (RRC) message included in the first message.

12. The RAN node according to any one of claims 1 to 11, wherein the at least one processor is configured to accept the updated list if a number of prepared PSCells included in the updated list does not exceed a maximum number predetermined by the MN or the source SN.

13. The RAN node according to any one of claims 1 to 12, wherein the updated list indicates an addition of at least one new prepared PSCell, a cancellation of at least one existing prepared PSCell, or both.

14. The RAN node according to any one of claims 1 to 13, wherein the first message is an S-NODE MODIFICATION REQUIRED message.

15. The RAN node according to any one of claims 1 to 14, wherein the at least one processor is configured to, if the updated list relates to the second conditional PSCell change, determine whether or not to accept an addition of one or more prepared PSCells requested or proposed by the first message, with respect to the second conditional PSCell change.

16. The RAN node according to any one of claims 1 to 15, wherein the at least one processor is configured to determine whether to reject part or all of the one or more prepared PSCells requested or proposed to be added by the first message.

17. The RAN node according to claim 15 or 16, wherein the at least one processor is configured to, if the updated list relates to the second conditional PSCell change and if an addition of part or all of the one or more prepared PSCells is accepted, inform the source SN via a second message of at least one additional prepared PSCell that has been accepted.

18. The RAN node according to claim 17, wherein the second message is an S-NODE MODIFICATION REQUEST message.

19. The RAN node according to any one of claims 15 to 18, wherein the at least one processor is configured to send to the candidate SN a third message specifying at least one accepted or rejected PSCell from among the one or more prepared PSCells requested or proposed to be added by the first message.

20. The RAN node according to claim 19, wherein
the first message indicates an updated full list of prepared PSCells prepared by the candidate SN, including the one or more prepared PSCells requested or proposed to be added by the first message, and
the third message indicates a full list of accepted one or more prepared PSCells.

21. The RAN node according to claim 19 or 20, wherein the third message is an S-NODE MODIFICATION CONFIRM message or an S-NODE MODIFICATION REFUSE message.

22. The RAN node according to any one of claims 15 to 21, wherein the at least one processor is configured to, if all of the one or more prepared PSCells requested or proposed to be added by the first message are rejected, send to the candidate SN a fourth message indicating that a modification of a conditional PSCell addition or change information requested by the first message is rejected.

23. The RAN node according to claim 22, wherein the fourth message is an S-NODE MODIFICATION REFUSE message.

24. The RAN node according to any one of claims 15 to 21, wherein the at least one processor is configured to:
retain execution condition information received from the source SN in a preparation of the second conditional PSCell change;
select, from the retained execution condition information, one or more execution conditions for each of the one or more prepared PSCells requested or proposed to be added by the first message; and
transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

25. A method performed by a radio access network (RAN) node configured to operate as a Master Node (MN) associated with a Master Cell Group (MCG) in dual connectivity for a User Equipment (UE), the method comprising:
receiving a first message from a candidate Secondary Node (SN), the candidate SN being common to both a first conditional Primary Secondary Cell Group (SCG) Cell (PSCell) change initiated by the MN and a second conditional PSCell change initiated by a source SN; and
determining which of the first conditional PSCell change or the second conditional PSCell change an updated list of one or more prepared PSCells indicated by the first message relates to.

26. A non-transitory computer readable medium storing a program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate Secondary Node (SN), the candidate SN being common to both a first conditional Primary Secondary Cell Group (SCG) Cell (PSCell) change initiated by the MN and a second conditional PSCell change initiated by a source SN; and
determining which of the first conditional PSCell change or the second conditional PSCell change an updated list of one or more prepared PSCells indicated by the first message relates to.

27. A radio access network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
prepare SN resources for the UE with respect to both a first conditional Primary SCG Cell (PSCell) change initiated by a Master Node (MN) and a second conditional PSCell change initiated by a source SN; and
send a first message to the MN,
wherein the first message includes an information element or field indicating which of the first conditional PSCell change or the second conditional PSCell change a modification of a conditional PSCell addition or change information requested by the first message is associated with.

28. The RAN node according to claim 27, wherein the information element or field explicitly indicates whether a source node of a conditional PSCell change is the MN or the source SN.

29. The RAN node according to claim 27 or 28, wherein the information element or field is a field in an inter-node Radio Resource Control (RRC) message included in the first message.

30. A method performed by a radio access network (RAN) node configured to operate as a candidate Secondary Node (SN) associated with a Secondary Cell Group (SCG) in dual connectivity for a User Equipment (UE), the method comprising:
preparing SN resources for the UE with respect to both a first conditional Primary SCG Cell (PSCell) change initiated by a Master Node (MN) and a second conditional PSCell change initiated by a source SN; and
sending a first message to the MN,
wherein the first message includes an information element or field indicating which of the first conditional PSCell change or the second conditional PSCell change a modification of a conditional PSCell addition or change information requested by the first message is associated with.

31. A non-transitory computer readable medium storing a program for causing a computer to perform a method for a radio access network (RAN) node configured to operate as a candidate Secondary Node (SN) associated with a Secondary Cell Group (SCG) in dual connectivity for a User Equipment (UE), the method comprising:
preparing SN resources for the UE with respect to both a first conditional Primary SCG Cell (PSCell) change initiated by a Master Node (MN) and a second conditional PSCell change initiated by a source SN; and
sending a first message to the MN,
wherein the first message includes an information element or field indicating which of the first conditional PSCell change or the second conditional PSCell change a modification of a conditional PSCell addition or change information requested by the first message is associated with.

32. A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
receive a first message from a candidate Secondary Node (SN) of a conditional Primary Secondary Cell Group (SCG) Cell (PSCell) change initiated by a source SN; and
determine whether or not to accept an addition of one or more prepared PSCells requested or proposed by the first message, with respect to the conditional PSCell change initiated by the source SN.

33. The RAN node according to claim 32, wherein the at least one processor is configured to determine whether to reject part or all of the one or more prepared PSCells requested or proposed to be added by the first message.

34. The RAN node according to claim 32 or 33, wherein the first message is an S-NODE MODIFICATION REQUIRED message.

35. The RAN node according to any one of claims 32 to 34, wherein the at least one processor is configured to, if an addition of part or all of the one or more prepared PSCells is accepted, inform the source SN via a second message of at least one additional prepared PSCell that has been accepted.

36. The RAN node according to claim 35, wherein the second message is an S-NODE MODIFICATION REQUEST message.

37. The RAN node according to any one of claims 32 to 36, wherein the at least one processor is configured to send to the candidate SN a third message specifying at least one accepted or rejected PSCell from among the one or more prepared PSCells requested or proposed to be added by the first message.

38. The RAN node according to claim 37, wherein
the first message indicates an updated full list of prepared PSCells prepared by the candidate SN, including the one or more prepared PSCells requested or proposed to be added by the first message, and
the third message indicates a full list of accepted one or more prepared PSCells.

39. The RAN node according to claim 37 or 38, wherein the third message is an S-NODE MODIFICATION CONFIRM message or an S-NODE MODIFICATION REFUSE message.

40. The RAN node according to any one of claims 32 to 39, wherein the at least one processor is configured to, if all of the one or more prepared PSCells requested or proposed to be added by the first message are rejected, send to the candidate SN a fourth message indicating that a modification of a conditional PSCell addition or change information requested by the first message is rejected.

41. The RAN node according to claim 40, wherein the fourth message is an S-NODE MODIFICATION REFUSE message.

42. The RAN node according to any one of claims 32 to 39, wherein the at least one processor is configured to:
retain execution condition information received from the source SN in a preparation of the conditional PSCell change;
select, from the retained execution condition information, one or more execution conditions for each of the one or more prepared PSCells requested or proposed to be added by the first message; and
transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

43. A method performed by a radio access network (RAN) node configured to operate as a Master Node (MN) associated with a Master Cell Group (MCG) in dual connectivity for a User Equipment (UE), the method comprising:
receiving a first message from a candidate Secondary Node (SN) of a conditional Primary Secondary Cell Group (SCG) Cell (PSCell) change initiated by a source SN; and
determining whether or not to accept an addition of one or more prepared PSCells requested or proposed by the first message, with respect to the conditional PSCell change initiated by the source SN.

44. A non-transitory computer readable medium storing a program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate Secondary Node (SN) of a conditional Primary Secondary Cell Group (SCG) Cell (PSCell) change initiated by a source SN; and
determining whether or not to accept an addition of one or more prepared PSCells requested or proposed by the first message, with respect to the conditional PSCell change initiated by the source SN.

45. A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
receive a first message from a candidate SN of a conditional Primary Secondary Cell Group (SCG) Cell (PSCell) addition or a conditional PSCell change; and
determine whether or not to reject part or all of one or more prepared PSCells requested or proposed to be added by the first message.

46. The RAN node according to claim 45, wherein the at least one processor is configured to send to the candidate SN a second message specifying at least one accepted or rejected PSCell from among the one or more prepared PSCells requested or proposed to be added by the first message.

47. The RAN node according to claim 46, wherein
the first message indicates an updated full list of prepared PSCells prepared by the candidate SN, including the one or more prepared PSCells requested or proposed to be added by the first message, and
the second message indicates a full list of accepted one or more prepared PSCells.

48. The RAN node according to claim 46 or 47, wherein
the first message is an S-NODE MODIFICATION REQUIRED message, and
the second message is an S-NODE MODIFICATION CONFIRM message or an S-NODE MODIFICATION REFUSE message.

49. The RAN node according to any one of claims 45 to 48, wherein the at least one processor is configured to, if all of the one or more prepared PSCells requested or proposed to be added by the first message are rejected, send to the candidate SN a third message indicating that a modification of a conditional PSCell addition or change information requested by the first message is rejected.

50. The RAN node according to claim 49, wherein the third message is an S-NODE MODIFICATION REFUSE message.

51. The RAN node according to any one of claims 45 to 50, wherein the conditional PSCell change is a conditional PSCell change initiated by the MN.

52. A method performed by a radio access network (RAN) node configured to operate as a Master Node (MN) associated with a Master Cell Group (MCG) in dual connectivity for a User Equipment (UE), the method comprising:
receiving a first message from a candidate SN of a conditional Primary Secondary Cell Group (SCG) Cell (PSCell) addition or a conditional PSCell change; and
determining whether or not to reject part or all of one or more prepared PSCells requested or proposed to be added by the first message.

53. A non-transitory computer readable medium storing a program for causing a computer to perform a method for a radio access network (RAN) node configured to operate as a Master Node (MN) associated with a Master Cell Group (MCG) in dual connectivity for a User Equipment (UE), the method comprising:
receiving a first message from a candidate SN of a conditional Primary Secondary Cell Group (SCG) Cell (PSCell) addition or a conditional PSCell change; and
determining whether or not to reject part or all of one or more prepared PSCells requested or proposed to be added by the first message.

54. A radio access network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
receive from a Master Node (MN) a first message regarding a conditional Primary SCG Cell (PSCell) change initiated by the source SN that has already been prepared, the first message specifying one or more prepared PSCells requested or proposed to be added by the candidate SN; and
determine whether or not to reject part or all of the one or more prepared PSCells requested or proposed to be added by the candidate SN.

55. The RAN node according to claim 54, wherein the at least one processor is configured to send to the MN a second message specifying at least one accepted or rejected PSCell from among the one or more prepared PSCells.

56. The RAN node according to claim 55, wherein
the first message indicates an updated full list of prepared PSCells prepared by the candidate SN, including the one or more prepared PSCells, and
the second message indicates a full list of accepted one or more prepared PSCells.

57. The RAN node according to claim 55 or 56, wherein
the first message is an S-NODE MODIFICATION REQUEST message, and
the second message is an S-NODE MODIFICATION REQUEST ACKNOWLEDGE message.

58. The RAN node according to any one of claims 54 to 57, wherein the at least one processor is configured to, if all of the one or more prepared PSCells are rejected, send to the MN a third message indicating that a modification requested by the first message is rejected.

59. The RAN node according to claim 58, wherein the third message is an S-NODE MODIFICATION REQUEST REJECT message.

60. A method performed by a radio access network (RAN) node configured to operate as a source Secondary Node (SN) associated with a Secondary Cell Group (SCG) in dual connectivity for a User Equipment (UE), the method comprising:
receiving from a Master Node (MN) a first message regarding a conditional Primary SCG Cell (PSCell) change initiated by the source SN that has already been prepared, the first message specifying one or more prepared PSCells requested or proposed to be added by the candidate SN; and
determining whether or not to reject part or all of the one or more prepared PSCells requested or proposed to be added by the candidate SN.

61. A non-transitory computer readable medium storing a program for causing a computer to perform a method for a radio access network (RAN) node configured to operate as a source Secondary Node (SN) associated with a Secondary Cell Group (SCG) in dual connectivity for a User Equipment (UE), the method comprising:
receiving from a Master Node (MN) a first message regarding a conditional Primary SCG Cell (PSCell) change initiated by the source SN that has already been prepared, the first message specifying one or more prepared PSCells requested or proposed to be added by the candidate SN; and
determining whether or not to reject part or all of the one or more prepared PSCells requested or proposed to be added by the candidate SN.

62. A radio access network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
retain execution condition information received from a source Secondary Node (SN) in a preparation of a conditional Primary Secondary Cell Group (SCG) Cell (PSCell) change initiated by the source SN;
receive a first message from a candidate SN of the conditional SN change that has already been prepared;
select, from the retained execution condition information, one or more execution conditions for each of one or more prepared PSCells requested or proposed to be added by the first message; and
transmit a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

63. A method performed by a radio access network (RAN) node configured to operate as a Master Node (MN) associated with a Master Cell Group (MCG) in dual connectivity for a User Equipment (UE), the method comprising:
retaining execution condition information received from a source Secondary Node (SN) in a preparation of a conditional Primary Secondary Cell Group (SCG) Cell (PSCell) change initiated by the source SN;
receiving a first message from a candidate SN of the conditional SN change that has already been prepared;
selecting, from the retained execution condition information, one or more execution conditions for each of one or more prepared PSCells requested or proposed to be added by the first message; and
transmitting a Radio Resource Control (RRC) message to the UE, the RRC message including an SCG configuration for each of the one or more prepared PSCells provided by the candidate SN by the first message and also including the selected one or more execution conditions for each of the one or more prepared PSCells.

64. A non-transitory computer readable medium storing a program for causing a computer to perform a method for a radio access network (RAN) node configured to operate as a Master Node (MN) associated with a Master Cell Group (MCG) in dual connectivity for a User Equipment (UE), the method comprising:
retaining execution condition information received from a source Secondary Node (SN) in a preparation of a conditional Primary Secondary Cell Group (SCG) Cell (PSCell) change initiated by the source SN;
receiving a first message from a candidate SN of the conditional SN change that has already been prepared;
selecting, from the retained execution condition information, one or more execution conditions for each of one or more prepared PSCells requested or proposed to be added by the first message; and
transmitting a Radio Resource Control (RRC) message to the UE, the RRC message including an SCG configuration for each of the one or more prepared PSCells provided by the candidate SN by the first message and also including the selected one or more execution conditions for each of the one or more prepared PSCells.
